(19) Europäisches Patentamt
European Patent Office
Office européen des brevets

(11)     EP 2 610 449 B1

## (12) EUROPEAN PATENT SPECIFICATION

(45) Date of publication and mention
of the grant of the patent:
**26.09.2018 Bulletin 2018/39**

(21) Application number: **12196578.4**

(22) Date of filing: **11.12.2012**

(51) Int Cl.:
*F01N 3/025* *(2006.01)*     *F01N 9/00* *(2006.01)*
*F02D 41/02* *(2006.01)*     *F02D 41/14* *(2006.01)*
*F02D 41/18* *(2006.01)*     *F02D 41/40* *(2006.01)*

(54) **Exhaust Gas Control System for Internal Combustion Engine**

Abgassteuerungssystem für einen Verbrennungsmotor

Système de commande de gaz d'échappement pour moteur à combustion interne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2011 JP 2011286741**

(43) Date of publication of application:
**03.07.2013 Bulletin 2013/27**

(73) Proprietor: **TOYOTA JIDOSHA KABUSHIKI KAISHA**
**Toyota-shi, Aichi-ken, 471-8571 (JP)**

(72) Inventors:
• **Takamoto, Satoshi**
**Toyota Aichi-ken, 470-0334 (JP)**
• **Yokoi, Tatsuhisa**
**Toyota-shi, Aichi-ken, 471-8571 (JP)**

(74) Representative: **D Young & Co LLP**
**120 Holborn**
**London EC1N 2DY (GB)**

(56) References cited:
**FR-A1- 2 921 416       JP-A- 2000 179 330**
**US-A1- 2005 241 301**

**Description**

BACKGROUND OF THE DISCLOSURE

1. Field of the Disclosure

The disclosure relates to an exhaust gas control system for an internal combustion engine, which executes control for regenerating a particulate filter in an exhaust passage.

2. Description of Related Art

Particulate matter (PM) is contained in exhaust gas emitted from an internal combustion engine (for example, diesel engine). Then, a particulate filter called diesel particulate filter (DPF) is arranged in an exhaust passage of the internal combustion engine.

When the temperature of the DPF increases to a predetermined temperature (for example, 600°C to 650°C), PM trapped in the DPF burns and is removed from the DPF. That is, the DPF is regenerated as it is increased in temperature, and is usable continuously. The temperature of the DPF is, for example, increased by fuel injection called post injection of which the injection timing is later than that of main injection, additive fuel supply for adding fuel to a portion upstream of the DPF in the exhaust passage, or the like. That is, the temperature of exhaust gas flowing into the DPF is increased by supplying unburned fuel to a portion upstream of the DPF and the fuel is burned or heated by catalyst reaction. By so doing, the temperature of the DPF is increased. Control for regenerating the DPF by burning and removing PM is referred to as "DPF regeneration control".

When DPF regeneration control is executed, the temperature of the DPF needs to be kept within an appropriate temperature range. This is because an excessive increase in the temperature of the DPF during DPF regeneration control may lead to breakage of the DPF or, when a catalyst substance is supported on the DPF, degradation of the catalyst substance. Furthermore, this is because, when the temperature of the DPF is excessively low during DPF regeneration control, it requires a long period of time to burn PM, so it leads to an increase in the amount of post injection and/or the amount of additive fuel supply and, as a result, may deteriorate fuel economy.

One of related arts that take measures against the above issue includes a temperature sensor at a portion upstream of the DPF in the exhaust passage and executes feedback control over the amount of post injection (post fuel injection amount) such that a sensor detected temperature based on a detected value of the temperature sensor coincides with a target temperature. Furthermore, this related art models a temporal delay of a variation in exhaust gas temperature against a variation in the amount of post injection using a transfer function, and then calculates an estimated value of the exhaust gas temperature using the model. The model is constructed in consideration of a time constant (first order lag) and a dead time. Then, the related art acquires a learning value by performing integral learning on the basis of a deviation between the exhaust gas temperature estimated by the model and the sensor detected temperature and then incorporates the learning value into feedback control (for example, se Japanese Patent Application Publication No. 2005-315198 (JP 2005-315198 A)).

Incidentally, the inventors found that "when the above-described model is, for example, constructed by an approximate expression attended with a second order lag, such as a known Pade approximate expression, estimation accuracy immediately after a start of temperature estimation is not high, so it is not desirable to execute feedback control (including learning control) for bringing an actual sensor detected temperature into coincidence with the estimated temperature during such period".

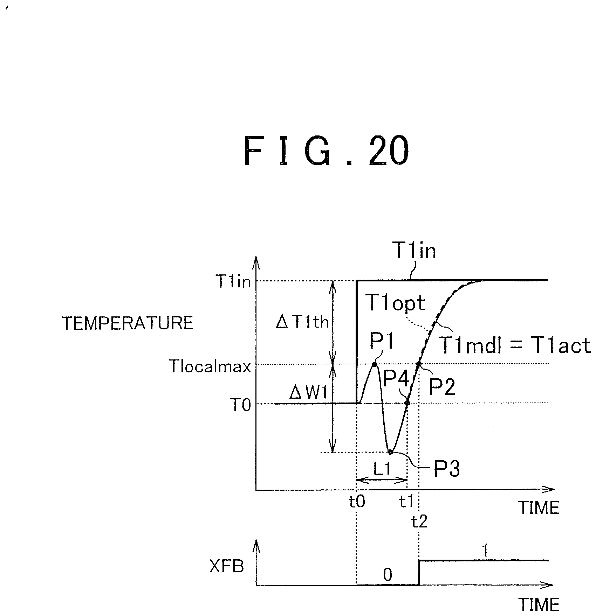

More specifically, for example, as shown in FIG. 20, when a DPF regeneration start condition is satisfied at time t0 and then temperature estimation through a model is started from time t0, an ideal estimated temperature is Tlopt indicated by the broken line; whereas an estimated temperature estimated through the model varies like T1mdl indicated by the solid line. That is, the estimated temperature T1mdl increases or decreases by a large amount in a "period from time t0 to time t1" at least immediately after the start of temperature estimation and significantly deviates from the ideal estimated temperature T1opt. Thus, it is not desirable to execute the above feedback control during such a period.

SUMMARY OF THE DISCLOSURE

The disclosure provides an exhaust gas control system for an internal combustion engine, which, at the time of executing DPF regeneration control through feedback control using a temperature sensor model, is able to appropriately increase the temperature of a DPF by prohibiting the feedback control during a period in which the temperature sensor model is estimating an inappropriate value.

A teaching of the disclosure provides an exhaust gas control system for an internal combustion engine. The exhaust gas control system includes: a particulate filter that is arranged in an exhaust passage of the internal combustion engine and that traps particulate contained in exhaust gas from the engine; a temperature sensor that is arranged in the exhaust passage and that outputs an output value that varies with a temperature of a portion at which the temperature sensor is arranged in the exhaust passage; a temperature conversion unit that converts the output value of the temperature sensor to a sensor detected temperature; and regeneration control means for controlling an amount of energy applied to the particulate filter on the basis of the sensor detected temperature such that a temperature of the particulate filter coincides with a predetermined command temperature after time point at which a regeneration start condition is satisfied, wherein the exhaust gas control system regenerates the particulate filter by increasing the temperature of the particulate filter to burn the particulate trapped in the particulate filter.

Furthermore, the regeneration control means includes: feedforward means for supplying energy of a predetermined feedforward amount to the particulate filter such that the temperature of the particulate filter coincides with the command temperature after the time point at which the regeneration start condition is satisfied; and feedback means for executing feedback control over an amount of the energy such that the sensor detected temperature coincides with a final target temperature that is a target temperature that is finally determined on the basis of the command temperature after the time point at which the regeneration start condition is satisfied.

In addition, the feedback means includes: target detected temperature calculation means for calculating a sensor target detected temperature that is a target value in the feedback control using a temperature sensor model; feedback control means for executing the feedback control using the sensor target detected temperature; and feedback control prohibition permitting means for prohibiting and allowing execution of the feedback control.

More specifically, the target detected temperature calculation means calculates a sensor target detected temperature according to a period of time elapsed from the time point at which the regeneration start condition is satisfied by (i) estimating the sensor detected temperature for a period of time elapsed from the time point at which the regeneration start condition is satisfied in the case where energy of the feedforward amount is supplied to the particulate filter from the time point at which the regeneration start condition is satisfied, based on the final target temperature and (ii) using a temperature sensor model for generating the estimated sensor detected temperature as the sensor target detected temperature that is a target value in the feedback control.

The feedback control means executes the feedback control by controlling the amount of energy applied to the particulate filter such that the sensor target detected temperature coincides with the sensor detected temperature.

The feedback control prohibition permitting means prohibits execution of the feedback control that uses the sensor target detected temperature until specific time point at which a predetermined period elapses from the time point at which the regeneration start condition is satisfied, and allows execution of the feedback control after the specific time point.

The specific time point may be, for example, determined as time point at which a period of time elapsed from the time point at which the regeneration start condition is satisfied has reached a predetermined period of time corresponding to the predetermined period.

Furthermore, the specific time point may be, for example, determined as time point at which a difference between the final target temperature and the sensor target detected temperature changes from a state where the difference is larger than a predetermined threshold temperature difference to a state where the difference is lower than or equal to the threshold temperature difference after the time point at which the regeneration start condition is satisfied when the temperature sensor model is constructed by Pade aproximation.

As shown in FIG. 20, when the temperature sensor model is constructed by Pade approximation, Laguerre approximation, or the like, the sensor target detected temperature returns to a local maximum value Tlocalmax (see point P1) after the regeneration start condition is satisfied at the specific time point (t2) at which the predetermined period has elapsed from the time point (t0) at which the regeneration start condition is satisfied, and, after the specific time point, the sensor target detected temperature T1mdl changes along the ideal temperature T1opt. Thus, by detecting specific time point through the above configuration, it is possible to execute feedback control using the proper (not including an approximation error through a model) sensor target detected temperature T1mdl.

Thus, the threshold temperature difference may be set to a value smaller than or equal to a difference ΔTth between the final target temperature and Tlocalmax (see point P1) of the sensor target detected temperature, which appears for the first time after the regeneration start condition is satisfied.

Another purpose, another feature and associated advantages of the disclosure are easily understood from teachings of the disclosure, described with reference to the following drawings.
Particular aspects of the invention are set out in the appended claims.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic configuration view of an exhaust gas control system according to an embodiment of the invention and an internal combustion engine to which the exhaust gas control system is applied;

FIG. 2 is a block diagram for illustrating DPF regeneration control that is executed by the exhaust gas control system shown in FIG. 1;

FIG. 3 is a view for illustrating a main injection period and a post injection period;

FIG. 4 is a time chart that shows a state of changes of values in the case where a command temperature is changed;

FIG. 5 is a block diagram of a first temperature sensor model that is used by the exhaust gas control system shown in FIG. 1;

FIG. 6A is a graph that shows the correlation between a dead time of an output value of a first temperature sensor and an air amount, and FIG. 6B is a graph that shows the correlation among a dead time of an output value of a second temperature sensor, an air amount and an ash amount;

FIG. 7A is a graph that shows the correlation between a natural frequency of an output value of the first temperature sensor and an air amount, and FIG. 7B is a graph that shows the correlation among a natural frequency of an output value of the second temperature sensor, an air amount and an ash amount;

FIG. 8A is a graph that shows the correlation between a time constant of an output value of the first temperature sensor and an air amount, FIG. 8B is a graph that shows the correlation among a time constant of an output value of the second temperature sensor, an air amount and an ash amount;

FIG. 9A is a graph that shows the correlation between an integral gain of feedback control that uses the first temperature sensor and an air amount, FIG. 9B is a graph that shows the correlation among an integral gain of feedback control that uses the second temperature sensor, an air amount and an ash amount;

FIG. 10A is a graph that shows the correlation between a proportional gain of feedback control that uses the first temperature sensor and an air amount, FIG. 10B is a graph that shows the correlation among a proportional gain of feedback control that uses the second temperature sensor, an air amount and an ash amount;

FIG. 11 is a block diagram of a second temperature sensor model that is used by the exhaust gas control system shown in FIG. 1;

FIG. 12 is a graph that shows a variation in difference between an actual temperature of the DPF shown in FIG. 1 and a first temperature sensor detected temperature based on an output value of the first temperature sensor with respect to an air amount;

FIG. 13 is a graph that shows a variation in difference between an actual temperature of the DPF shown in FIG. 1 and a second temperature sensor detected temperature based on an output value of the second temperature sensor with respect to an air amount;

FIG. 14A and FIG. 14B is a flowchart that shows a routine that is executed by a CPU of an electrical control unit shown in FIG. 1;

FIG. 15 is a flowchart that shows a routine that is executed by the CPU of the electrical control unit shown in FIG. 1;

FIG. 16 is a flowchart that shows a routine that is executed by the CPU of the electrical control unit shown in FIG. 1;

FIG. 17 is a flowchart that shows a routine that is executed by the CPU of the electrical control unit shown in FIG. 1;

FIG. 18 is a flowchart that shows a routine that is executed by the CPU of the electrical control unit shown in FIG. 1;

FIG. 19 is a flowchart that shows a routine that is executed by the CPU of the electrical control unit shown in FIG. 1; and

FIG. 20 is a time chart that shows the behavior of an estimated value that is estimated through a temperature sensor model.

## DETAILED DESCRIPTION OF EMBODIMENTS

Hereinafter, an exhaust gas control system for an internal combustion engine according to an embodiment of the invention will be described with reference to the accompanying drawings.

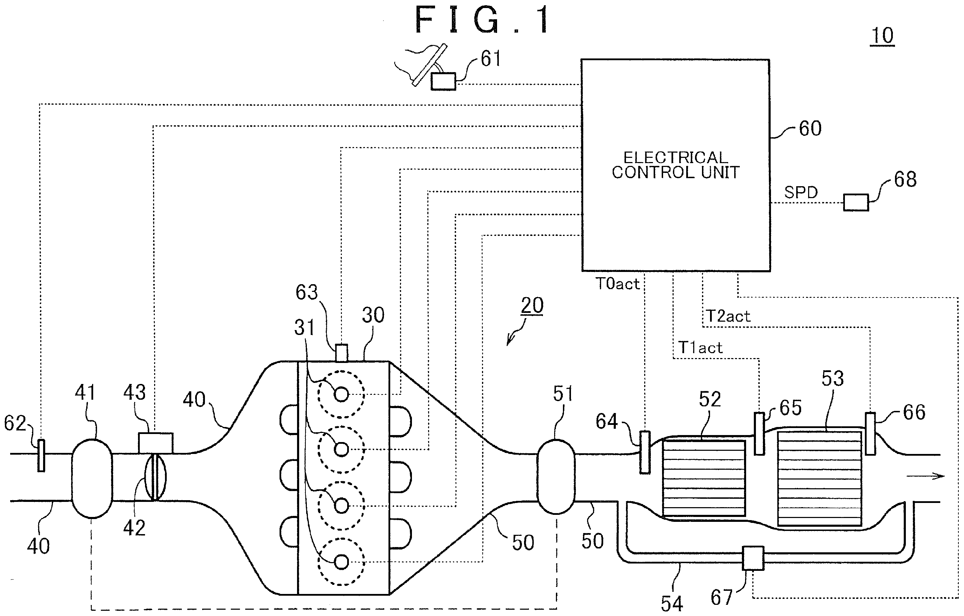

As shown in FIG. 1, the exhaust gas control system 10 is applied to an internal combustion engine 20. The engine 20 is a diesel engine. The engine 20 includes a body unit 30, an intake passage unit 40 and an exhaust passage unit 50. The intake passage unit 40 includes an intake manifold and an intake pipe. The exhaust passage unit 50 includes an exhaust manifold and an exhaust pipe.

The body unit 30 has a plurality of cylinders. A fuel injection valve 31 is arranged in correspondence with each of the plurality of cylinders. Each fuel injection valve 31 injects high-pressure fuel into a corresponding one of combustion chambers in response to an instruction signal from an electrical control unit 60 (described later).

A compressor 41 of a turbocharger and an intake throttle valve 42 are arranged in the intake pipe of the intake passage unit 40. The compressor 41 rotates together with a turbine of the turbocharger (described later) and compresses intake air. The intake throttle valve 42 is pivotably supported in the intake pipe. The intake throttle valve 42 is rotated by an intake throttle valve actuator 43, and changes the intake passage cross-sectional area of the intake pipe.

The turbine 51 of the turbocharger, a DOC 52 and a DPF 53 are arranged in the exhaust pipe of the exhaust passage unit 50 in order from the upstream side of the flow of exhaust gas toward the downstream side of the flow of exhaust gas. The turbine 51 is rotated by exhaust gas, and rotates the compressor 41.

The DOC 52 is a diesel engine oxidation catalyst (diesel oxidation catalyst). The DOC 52 is formed such that an oxidation catalyst is supported on the surface of a ceramic carrier having a honeycomb structure. The DOC 52 burns hydrocarbon components (unburned components) contained in exhaust gas through catalyst reaction to increase an exhaust gas temperature. By so doing, the temperature (bed temperature) of the DPF 53 increases.

The DPF 53 is a ceramic filter having a known structure. For example, the DPF 53 includes a plurality of gas flow passages formed of heat-resistant ceramics, such as cordierite, molded into a honeycomb structure. Exhaust gas flowing into the DPF 53 passes through a porous partition wall that forms the plurality of gas flow passages. At this time, PM, ash, and the like, in exhaust gas are trapped.

The electrical control unit 60 of the exhaust gas control system 10 is an electronic control circuit mainly formed of a known microcomputer that includes a CPU, a ROM, a RAM and an interface. The electrical control unit 60 is connected to an accelerator operation amount sensor 61, an air flow meter 62, an engine rotation speed sensor 63, an upstream temperature sensor 64, a first temperature sensor 65, a second temperature sensor 66, a differential pressure sensor 67 and a vehicle speed sensor 68.

The accelerator operation amount sensor 61 detects an operation amount of an accelerator pedal that is operated by a driver, and outputs an accelerator pedal operation amount AP (hereinafter, referred to as "accelerator operation amount AP"). The air flow meter 62 detects the amount of air flowing through the intake pipe of the intake passage unit 40, and outputs a signal GA that indicates the amount of the flowing air (hereinafter, referred to as "air amount GA"). The engine rotation speed sensor 63 generates a pulse each time a crankshaft of the engine 20 rotates a predetermined rotation angle. The electrical control unit 60 acquires an engine rotation speed NE on the basis of the pulse. Note that the electrical control unit 60 acquires an absolute crank angle of the engine 20 on the basis of a pulse from a cam position sensor (not shown) and the pulse from the engine rotation speed sensor 63.

The upstream temperature sensor 64 is arranged in the exhaust pipe of the exhaust passage unit 50 at a location downstream of the turbine 51 and upstream of the DOC 52. The upstream temperature sensor 64 generates an output value VT0 corresponding to the temperature of exhaust gas flowing through the location at which the upstream temperature sensor 64 is arranged. The electrical control unit 60 converts the output value VT0 of the upstream temperature sensor 64 to a temperature, and acquires the temperature T0act (hereinafter, referred to as "upstream temperature detected value T0act").

The first temperature sensor 65 is arranged in the exhaust pipe of the exhaust passage unit 50 at a location downstream of the DOC 52 and upstream of the DPF 53. The first temperature sensor 65 generates an output value VT1 corresponding to the temperature of exhaust gas flowing through the location at which the first temperature sensor 65 is arranged. The electrical control unit 60 converts the output value VT1 of the first temperature sensor 65 to a temperature and acquires the temperature T1act (hereinafter, referred to as "first temperature sensor detected temperature T1act"). The first temperature sensor detected temperature T1act is a detected temperature of exhaust gas flowing out from the DOC 52 and flowing into the DPF 53, based on the output value of the first temperature sensor 65. Thus, the first temperature sensor detected temperature T1act varies on the basis of an actual temperature of the DPF 53.

The second temperature sensor 66 is arranged in the exhaust pipe of the exhaust passage unit 50 at a location near the DPF 53 and downstream of the DPF 53. The second temperature sensor 66 generates an output value VT2 corresponding to the temperature of exhaust gas flowing through the location at which the second temperature sensor 66 is arranged. The electrical control unit 60 converts the output value VT2 of the second temperature sensor 66 to a temperature, and acquires the temperature T2act (hereinafter, referred to as "second temperature sensor detected temperature T2act"). The second temperature sensor detected temperature T2act is a detected temperature of exhaust gas flowing out from the DPF 53, based on the output value of the second temperature sensor 66. Thus, the second temperature sensor detected temperature T2act varies on the basis of an actual temperature of the DPF 53. Note that the second temperature sensor 66 may be arranged in the DPF 53.

The differential pressure sensor 67 is arranged in a pressure introducing pipe 54. One end of the pressure introducing pipe 54 is connected to a location between the turbine 51 and the DOC 52 in the exhaust pipe. The other end of the pressure introducing pipe 54 is connected to a location downstream of the DPF 53 in the exhaust pipe. Thus, the differential pressure sensor 67 detects a value corresponding to a difference between an exhaust gas pressure at a location upstream of the DOC 52 and the DPF 53 and an exhaust gas pressure at a location downstream of the DOC 52 and the DPF 53, and outputs the detected value Pd (hereinafter, referred to as "DPF upstream-downstream differential pressure Pd").

The vehicle speed sensor 68 detects the speed of a vehicle on which the engine 20 is mounted, and outputs the detected vehicle speed SPD.

The electrical control unit 60 is further connected to the intake throttle valve actuator 43, the plurality of fuel injection valves 31, and the like. The electrical control unit 60 transmits instruction signals to them.

Next, the outline of DPF regeneration control that is executed by the thus configured exhaust gas control system 10 will be described. The exhaust gas control system 10 estimates the amount of PM trapped in (deposited on) the DPF 53 (hereinafter, referred to as "PM deposition amount"). For example, the exhaust gas control system 10 estimates the PM deposition amount on the basis of the DPF upstream-downstream differential pressure Pd. As the PM deposition amount increases, the DPF upstream-downstream differential pressure Pd increases. The PM deposition amount may be estimated on the basis of an accumulated value of the air amount GA or accumulated value of a main fuel injection amount Qfin of the engine from completion of last PM regeneration control. The exhaust gas control system 10 executes DPF regeneration control when the PM deposition amount is larger than or equal to a control start permission amount PMth (that is, at the time when a DPF regeneration control start condition is satisfied or at the time when a regeneration start condition is satisfied). In DPF regeneration control, energy applied to the DPF 53 in order to increase the temperature of the DPF 53 is generated by fuel through so-called post injection in the present embodiment.

Furthermore, the exhaust gas control system 10 estimates the amount of ash deposited in the DPF 53 (hereinafter, referred to as "ash amount SASH") through a known method (described later). As the ash amount SASH increases, the heat capacity of the DPF 53 also increases. Then, the exhaust gas control system 10 incorporates the ash amount SASH into DPF regeneration control.

More specifically, the exhaust gas control system 10 calculates a target value of feedback control that uses the first temperature sensor 65 in DPF regeneration control by using a first temperature sensor model. Hereinafter, the target value is referred to as "first temperature sensor target detected temperature T1tgt or sensor target detected temperature T1tgt of the first temperature sensor 65". The first temperature sensor model estimates a detected temperature based on the output value of the first temperature sensor 65 (first temperature sensor detected temperature T1act) for a predetermined target temperature that is determined on the basis of a command temperature (first temperature sensor final target temperature T1in), and outputs the estimated value as a first temperature sensor target detected temperature T1tgt. The command temperature is a final target temperature of the temperature (bed temperature) of the DPF 53 in DPF regeneration control.

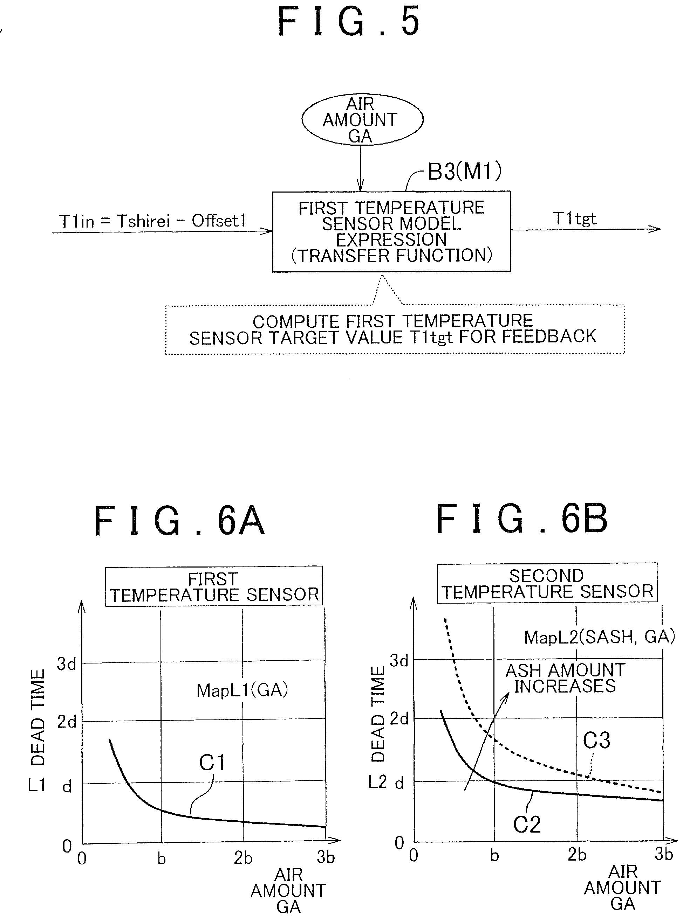

The first temperature sensor model includes a dead time parameter corresponding to a dead time of a variation in the first temperature sensor detected temperature T1act with respect to a variation in the first temperature sensor final target temperature T1in and a lag parameter corresponding to a time constant of a variation in the first temperature sensor detected temperature T1act with respect to a variation in the first temperature sensor final target temperature T1in as parameters. The lag parameter is a "time constant Td" when the first temperature sensor model is constructed by a first order lag equation, and is a "natural frequency $\omega n$" when the first temperature sensor model is constructed by a Pade approximation second order lag equation. The exhaust gas control system 10 changes the dead time parameter and lag parameter of the first temperature sensor model on the basis of the air amount GA (see FIG. 6A, FIG. 7A and FIG. 8A).

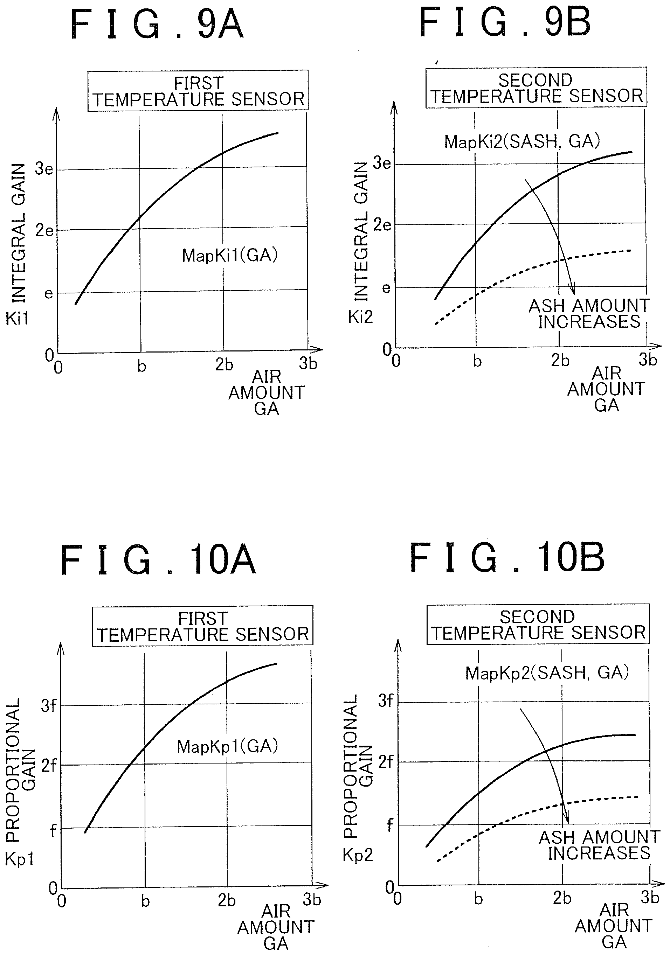

Then, the exhaust gas control system 10 calculates a feedback amount (first feedback amount) of a post fuel injection amount in accordance with known PI control (or PID control) such that the first temperature sensor detected temperature T1act coincides with the first temperature sensor target detected temperature T1tgt. At this time, the exhaust gas control system 10 changes a feedback control constant (integral gain Ki1, proportional gain Kp1, and the like) that is used in PI control on the basis of the air amount GA (see FIG. 9A and FIG. 10A).

Similarly, the exhaust gas control system 10 calculates a target value of feedback control that uses the second temperature sensor 66 in DPF regeneration control by using a second temperature sensor model. Hereinafter, the target value is referred to as "second temperature sensor target detected temperature T2tgt or sensor target detected temperature T2tgt of the second temperature sensor 66". The second temperature sensor model estimates a detected temperature based on the output value of the second temperature sensor 66 (second temperature sensor detected temperature T2act) for a predetermined target temperature that is determined on the basis of a command temperature (second temperature sensor final target temperature T2in), and outputs the estimated value as a second temperature sensor target detected temperature T2tgt.

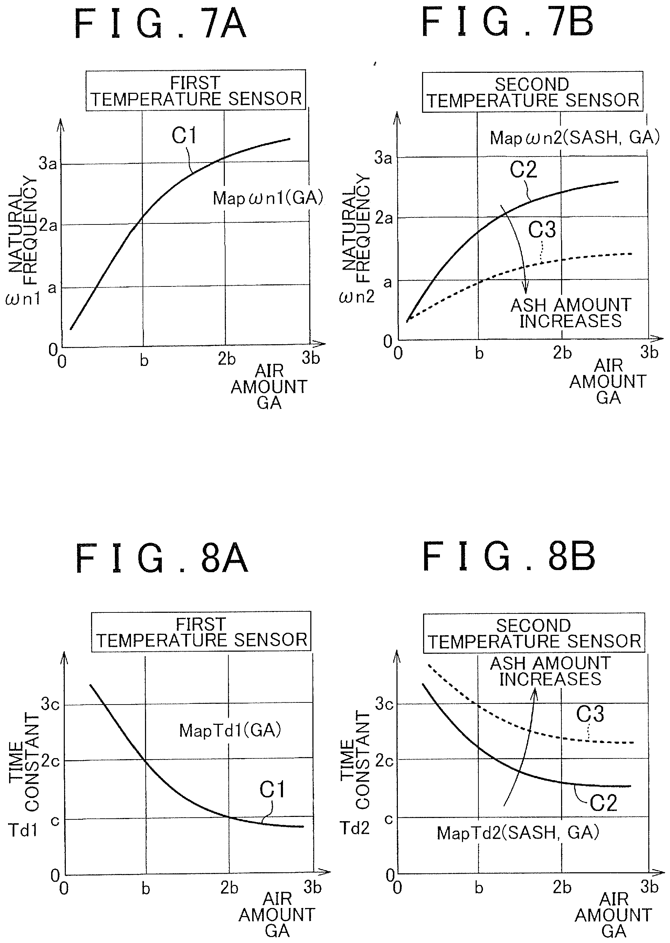

The second temperature sensor model is expressed by a transfer function of the same type as the first temperature sensor model. Thus, the second temperature sensor model includes a dead time parameter corresponding to a dead time of a variation in the second temperature sensor detected temperature T2act with respect to a variation in the second temperature sensor final target temperature T2in and a lag parameter corresponding to a time constant of a variation in the second temperature sensor detected temperature T2act with respect to a variation in the second temperature sensor final target temperature T2in as parameters. However, these dead time parameter and lag parameter respectively differ from the dead time parameter and lag parameter that are used in the first temperature sensor model. The exhaust gas control system 10 changes the dead time parameter and lag parameter of the second temperature sensor model on the basis of the air amount GA and the ash amount SASH (see FIG. 6B, FIG .7B and FIG. 8B).

Then, the exhaust gas control system 10 calculates a feedback amount (second feedback amount) of a post fuel injection amount in accordance with known PI control (or PID control) such that the second temperature sensor detected temperature T2act coincides with the second temperature sensor target detected temperature T2tgt. At this time, the exhaust gas control system 10 changes feedback control constants (integral gain Ki2, proportional gain Kp2, and the like) that are used in PI control on the basis of the air amount GA and the ash amount SASH (see FIG. 9B and FIG. 10B).

Note that it is determined whether the first temperature sensor 65 is used in feedback control of DPF regeneration control (that is, the first feedback amount is set as the final feedback amount) or the second temperature sensor 66 is used in feedback control of DPF regeneration control (that is, the second feedback amount is set as the final feedback amount) in consideration of the following points.

- A difference (deviation temperature) between the actual temperature (bed temperature) Tact of the DPF 53 (hereinafter, referred to as "actual DPF temperature Tact") and the first temperature sensor detected temperature T1act in the case where the temperature of the DPF 53 has converged in DPF regeneration control
- A difference (deviation temperature) between the actual DPF temperature Tact and the second temperature sensor detected temperature T2act in the case where the temperature of the DPF 53 has converged in DPF regeneration control
- The dead time parameter and lag parameter of the first temperature sensor model
- The dead time parameter and lag parameter of the second temperature sensor model

As a result, particularly, when the second feedback amount is used as the final feedback amount, even when the heat capacity of the DPF 53 varies due to the ash amount SASH (in other words, irrespective of the ash amount SASH), it is possible to accurately increase the temperature of the DPF 53 to the target temperature. Thus, it is possible to regenerate the DPF 53 efficiently without degradation of the DPF 53.

As described above, the exhaust gas control system 10 calculates the first feedback amount and the second feedback amount, and executes feedback control over the post fuel injection amount (feedback control of DPF regeneration control) using one of the first feedback amount and the second feedback amount. However, the exhaust gas control system 10 does not execute (prohibits) the feedback control when various feedback control conditions (described later) are not satisfied. In other words, only when the feedback control conditions are satisfied, one of the first feedback amount and the second feedback amount is used to correct the post fuel injection amount.

One of the feedback control conditions is a condition that the first temperature sensor detected temperature T1act (that is, the first temperature sensor target detected temperature T1tgt) that is estimated or calculated with the use of the first temperature sensor model constructed by a Pade approximation quadratic in the present embodiment is an accurate value.

More specifically, as shown in FIG. 20, when the DPF regeneration start condition is satisfied at time t0 and then temperature estimation through the first temperature sensor model is started from time t0, the ideal estimated temperature is Tlopt indicated by the broken line; whereas the estimated temperature that is estimated through the first temperature sensor model varies like T1mdl indicated by the solid line. That is, the estimated temperature T1mdl increases or decreases by a large amount in a "period from time t0 to time t1" at least immediately after temperature estimation and significantly deviates from the ideal estimated temperature Tlopt. Thus, the exhaust gas control system 10 stops calculating the first feedback amount and prohibits the above-described feedback control at least during such a period (that is, a period from time point at which the DPF regeneration start condition is satisfied to first specific time point at which a first predetermined period of time elapses).

The first specific time point may be determined as time point at which a predetermined first set period of time has elapsed from when the DPF regeneration start condition is satisfied. However, in the present embodiment, the first specific time point is determined as time point (see point P2 and time t2 in FIG. 20) at which the difference ($\Delta$T1 = T1in - T1tgt) between the first temperature sensor final target temperature T1in that is a temperature to which the first temperature sensor detected temperature T1act should finally reach (described later) and the first temperature sensor target detected temperature T1tgt (= T1mdl) calculated through the first temperature sensor model changes from a state where the difference $\Delta$T1 is larger than a first threshold temperature difference $\Delta$T1th to a state where the difference $\Delta$T1 is smaller than or equal to the first threshold temperature difference $\Delta$T1th. This is because, according to the first temperature sensor model, at least after the first specific time point (time t2), the first temperature sensor target detected temperature T1tgt varies along the ideal first temperature sensor target detected temperature T1opt.

Similarly, another one of the feedback control conditions is a condition that the second temperature sensor detected temperature T2act (that is, the second temperature sensor target detected temperature T2tgt) that is estimated or calculated with the use of the second temperature sensor model is an accurate value.

The exhaust gas control system 10 stops calculating the second feedback amount and prohibits the above-described feedback control at least during a period from time point at which the DPF regeneration start condition is satisfied to second specific time point at which a second predetermined period of time elapses.

The second specific time point may be determined as time point at which a predetermined second set period of time has elapsed from when the DPF regeneration start condition is satisfied. However, in the present embodiment, the second specific time point is determined as time point at which the difference ($\Delta$T2 = T2in - T2tgt) between the second temperature sensor final target temperature T2in that is a temperature to which the second temperature sensor detected temperature T2act should finally reach (described later) and the second temperature sensor target detected temperature T2tgt calculated through the second temperature sensor model changes from a state where the difference ΔT2 is larger than a second threshold temperature difference ΔT2th to a state where the difference ΔT2 is smaller than or equal to the second threshold temperature difference ΔT2th. This is because, according to the second temperature sensor model, as in the case of the first temperature sensor model, at least the second specific time point or later, the second temperature sensor target detected temperature T2tgt varies along the ideal second temperature sensor target detected temperature T2opt.

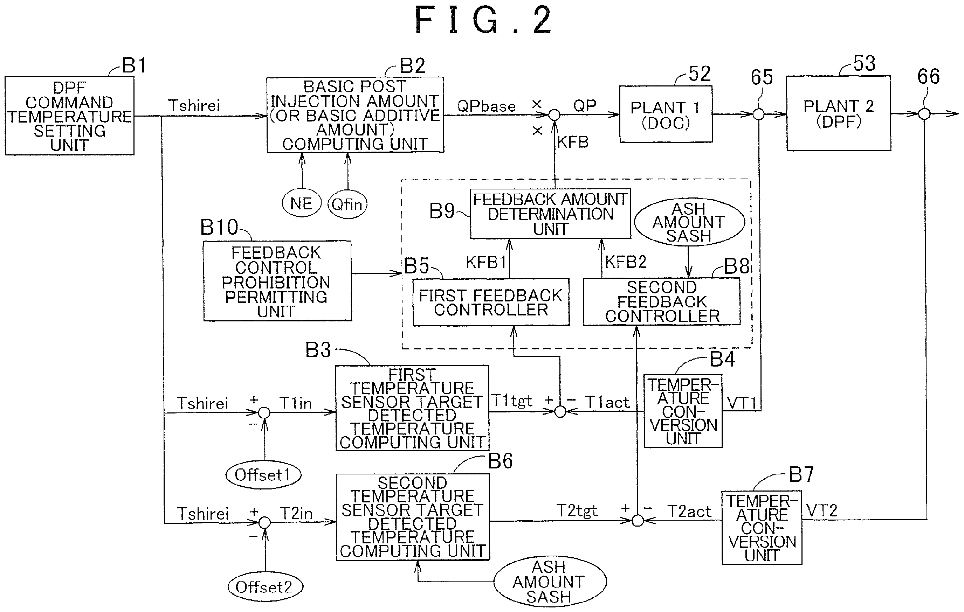

Next, the details of DPF regeneration control that is executed by the exhaust gas control system 10 will be described with reference to FIG. 2 that is a functional block diagram. Note that the functions of blocks shown in FIG. 2 are actually implemented through processes (described later) that are executed by the CPU of the electrical control unit 60.

A DPF command temperature setting unit B1 sets a DPF command temperature Tshirei when the DPF regeneration control start condition is satisfied. The DPF command temperature Tshirei may be a constant value (for example, 600°C) or may be changed on the basis of an operating condition of the engine 20 (for example, the air amount GA and the engine rotation speed NE) and/or the PM deposition amount. For example, the DPF command temperature Tshirei may be set to a relatively low temperature (for example, 600°C) in order to avoid rapid combustion of particulate when the PM deposition amount exceeds a high-side threshold, and may be set to a relatively high temperature (for example, 650°C) in order to reduce a period of time required for DPF regeneration control when the PM deposition amount is smaller than the high-side threshold and is larger than the control start permission amount PMth.

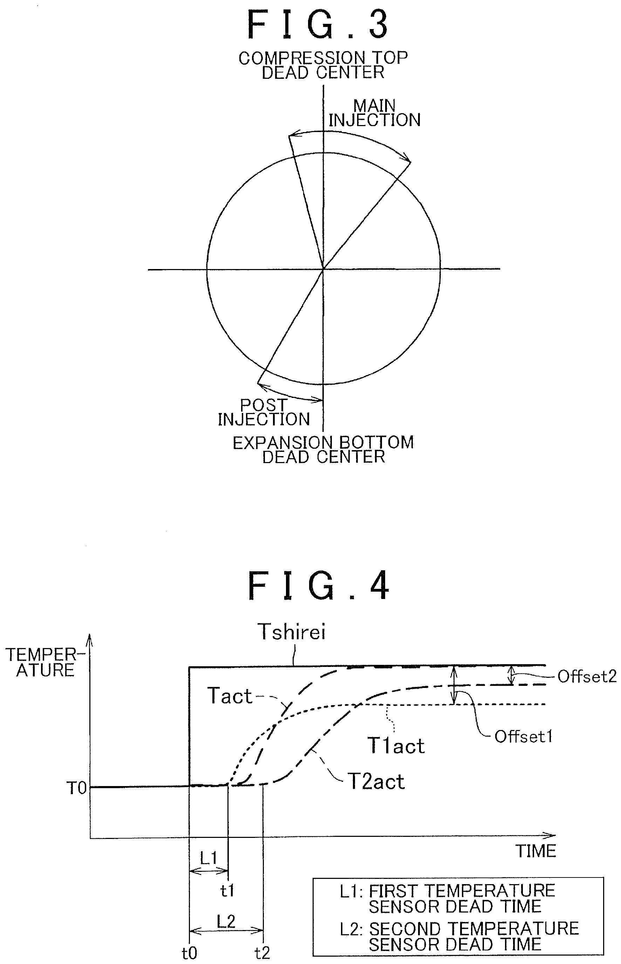

A basic post injection amount computing unit B2 determines a basic post injection amount QPbase on the basis of the DPF command temperature Tshirei, the engine rotation speed NE and the main fuel injection amount Qfin. The basic post injection amount QPbase is a feedforward amount determined through an experiment in advance such that the actual DPF temperature Tact coincides with the DPF command temperature Tshirei when fuel of the basic post injection amount QPbase is injected from each fuel injection valve 31 in a post injection period near an expansion bottom dead center (period after combustion through main fuel injection) shown in FIG. 3. Note that the main fuel injection amount Qfin is, for example, calculated separately by the CPU on the basis of a required torque estimated from the accelerator operation amount AP and the engine rotation speed NE. As shown in FIG. 3, fuel of the main fuel injection amount Qfin is injected from each fuel injection valve 31 in a main injection period near a compression top dead center.

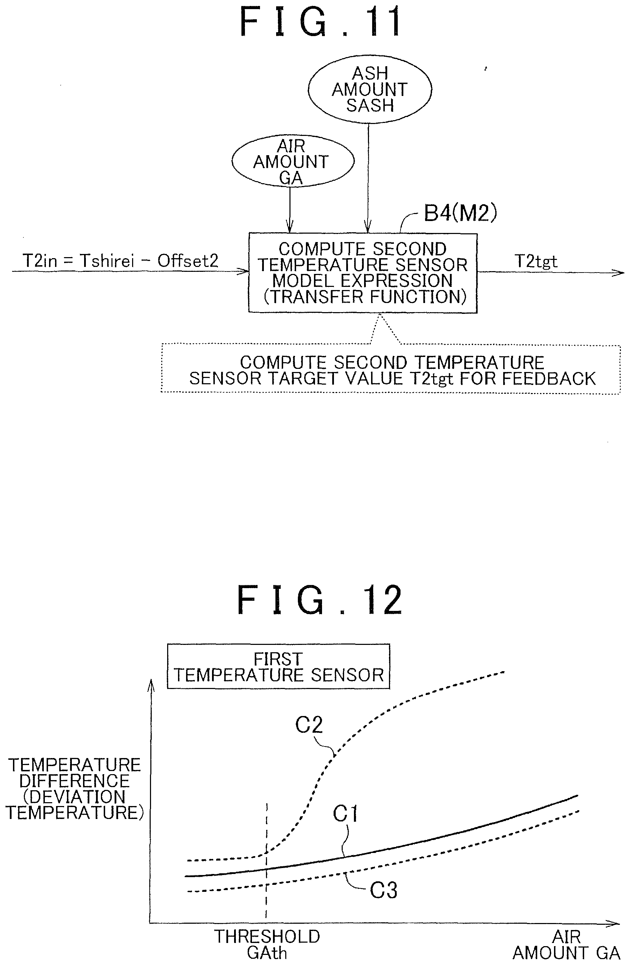

A first temperature sensor target detected temperature computing unit B3 receives the first temperature sensor final target temperature Tlin, computes the first temperature sensor target detected temperature T1tgt using the first temperature sensor model on the basis of the first temperature sensor final target temperature Tlin, and outputs the first temperature sensor target detected temperature T1tgt. Here, the first temperature sensor final target temperature T1in is a value (T1in = Tshirei - Offset1) obtained by subtracting an offset value Offset1 from the DPF command temperature Tshirei. As shown in FIG. 4, the offset value Offset1 is a difference (steady deviation, deviation temperature) between the DPF command temperature Tshirei and the first temperature sensor detected temperature T1act when the actual temperature of the DPF 53 (actual DPF temperature Tact) coincides with (has converged to) the DPF command temperature Tshirei. A constant value may be set for the offset value Offset1, or a value that varies with the air amount GA may be set for the offset value Offset1 (see a line C1 in FIG. 12).

Here, the first temperature sensor model M1 that is used by the first temperature sensor target detected temperature computing unit B3 will be described. As shown in FIG. 5, the first temperature sensor model M1 receives the first temperature sensor final target temperature T1in and is used to output the first temperature sensor target detected temperature T1tgt.

Incidentally, FIG. 4 shows the behaviors of values in the case where the DPF command temperature Tshirei is increased by starting DPF regeneration control at time t0 (specific time point) and, by so doing, fuel of the basic post injection amount QPbase adapted in advance such that the actual DPF temperature Tact coincides with the DPF command temperature Tshirei is injected through post injection.

According to FIG. 4, the first temperature sensor detected temperature T1act starts to increase at time t1 at which a dead time L1 has elapsed. The dead time L1 corresponds to a period of time until the temperature of exhaust gas flowing into the DPF 53 starts to increase as a result of combustion of fuel, supplied through post injection, in the DOC 52. Furthermore, as is understood from FIG. 4, the first temperature sensor detected temperature T1act increases with a lag. That is, it is possible to approximate a variation in the first temperature sensor detected temperature T1act with the use of a mathematical expression that expresses a dead time and a first order lag or a second order lag (a known Pade approximation (second order) in the present embodiment).

Then, the first temperature sensor model M1 is constructed as a model that has a transfer function of the following mathematical expression (1) based on Pade approximation.

$$Model\ formula = \frac{\omega n^2}{s^2 + 2\zeta\omega ns + \omega n^2} \cdot \frac{1 - (2/L)s + (L^2/12)s^2}{1 + (2/L)s + (L^2/12)s^2} \cdots(1)$$

$\zeta$: attenuation coefficient, $\omega n$: natural frequency, L: dead time, s: Laplace operator

The first temperature sensor target detected temperature computing unit B3 applies the dead time L1 of the first temperature sensor 65 as the dead time L in the above-described mathematical expression (1), and applies a natural frequency $\omega n1$ of the first temperature sensor 65 as the natural frequency $\omega n$.

Incidentally, according to the experiment, as shown in FIG. 6A, the dead time L1 reduces as the air amount GA increases. This is because, as the air amount GA increases, the basic post injection amount QPbase increases, and the amount of energy that is input to the DOC 52 (thus, the DPF 53) increases.

Furthermore, as shown in FIG. 7A, the natural frequency $\omega n1$ increases as the air amount GA increases. This corresponds to the fact that, as shown in FIG. 8A, a time constant Td1 in the case where the first temperature sensor model is constructed by a first order lag approximation equation reduces as the air amount GA increases (that is, the first temperature sensor detected temperature T1act relatively early increases).

On the basis of the above viewpoint, the first temperature sensor target detected temperature computing unit B3 acquires the dead time L1 by applying the actual air amount GA to a table shown in FIG. 6A, and then substitutes the dead time L1 into the dead time L in the above-described mathematical expression (1). Furthermore, the first temperature sensor target detected temperature computing unit B3 acquires the natural frequency $\omega n1$ by applying the actual air amount GA to a table shown in FIG. 7A, and then substitutes the natural frequency $\omega n1$ into the natural frequency $\omega n$ in the above-described mathematical expression (1). Thus, the first temperature sensor target detected temperature T1tgt is calculated. The first temperature sensor target detected temperature T1tgt is a target value of the first temperature sensor detected temperature T1act, which varies with a lapse of time from time point at which the DPF regeneration start condition is satisfied.

Referring back to FIG. 2, a temperature conversion unit B4 converts the output value VT1 of the first temperature sensor 65 to the first temperature sensor detected temperature T1act using a function f. According to the function f, as the output value VT1 increases, the first temperature sensor detected temperature T1act becomes a higher value.

A first feedback controller B5 calculates a first feedback amount KFB1 of the post fuel injection amount QP in accordance with proportional plus integral (PI) control such that the first temperature sensor detected temperature T1act coincides with the first temperature sensor target detected temperature T1tgt. That is, the first feedback controller B5 calculates the first feedback amount KFB1 in accordance with the following mathematical expression (2). In the mathematical expression (2), $\Delta T1$ is a value obtained by subtracting the first temperature sensor detected temperature T1act from the first temperature sensor target detected temperature T1tgt ($\Delta T1$ = first temperature sensor target detected temperature T1tgt - first temperature sensor detected temperature T1act).

$$KFB1 = Kp1 \cdot \Delta T1 + Ki1 \cdot \int \Delta T1 dt \cdots(2)$$

The integral gain (integral constant) Ki1 in the above mathematical expression (2) is set so as to increase as the air amount GA increases as shown in FIG. 9A. Similarly, the proportional gain (proportional constant) Kp1 in the above-described mathematical expression (2) is set so as to increase as the air amount GA increases as shown in FIG. 10A. The integral gain and the proportional gain are control gains in feedback control, and are control parameters in feedback control.

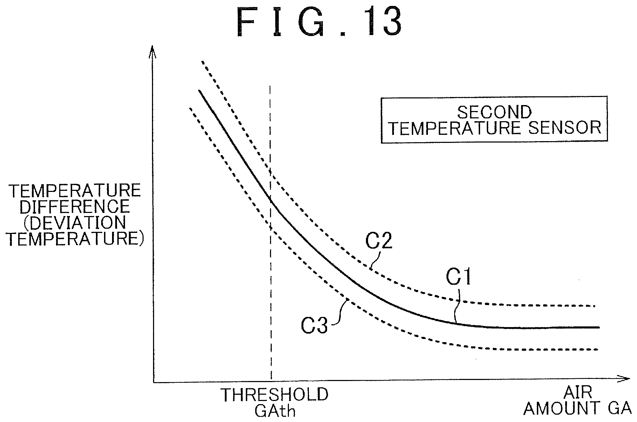

A second temperature sensor target detected temperature computing unit B6 shown in FIG. 2 receives the second temperature sensor final target temperature T2in, computes the second temperature sensor target detected temperature T2tgt using the second temperature sensor model on the basis of the second temperature sensor final target temperature T2in, and outputs the second temperature sensor target detected temperature T2tgt. Here, the second temperature sensor final target temperature T2in is a value (T2in = Tshirei - Offset2) obtained by subtracting an offset value Offset2 from the DPF command temperature Tshirei. As shown in FIG. 4, the offset value Offset2 is a difference (steady deviation, deviation temperature) between the DPF command temperature Tshirei and the second temperature sensor detected temperature T2act when the actual temperature of the DPF 53 (actual DPF temperature Tact) coincides with (has converged to) the DPF command temperature Tshirei. A constant value may be set for the offset value Offset2, or a value that varies with the air amount GA may be set for the offset value Offset2 (see a line C1 in FIG. 13).

Here, the second temperature sensor model M2 that is used by the second temperature sensor target detected temperature computing unit B6 will be described. As shown in FIG. 11, the second temperature sensor model M2 receives the second temperature sensor final target temperature T2in and is used to output the second temperature sensor target detected temperature T2tgt.

As shown in FIG. 4, the second temperature sensor detected temperature T2act starts to increase at time t2 at which a dead time L2 that is longer than the dead time L1 has elapsed. The dead time L2 corresponds to a period of time until the temperature of exhaust gas flowing into the DPF 53 increases as a result of combustion of fuel, supplied through post injection, in the DOC 52 and, in addition, the high-temperature exhaust gas starts to increase the temperature of the DPF 53. Furthermore, as is understood from FIG. 4, the second temperature sensor detected temperature T2act increases with a lag. That is, it is possible to approximate a variation in the second temperature sensor detected temperature T2act with a mathematical expression that expresses a dead time and a first order lag or a second order lag (known Pade approximation (second order) in the present embodiment). Thus, the second temperature sensor model M2 is expressed by a transfer function of the same type as the above-described first temperature sensor model M1 (that is, a transfer function of the above-described mathematical expression (1)). However, the second temperature sensor target detected temperature computing unit B6 applies the dead time L2 of the second temperature sensor 66 as the dead time L of the above-described mathematical expression (1), and applies a natural frequency ωn2 of the second temperature sensor 66 as the natural frequency ωn.

Incidentally, according to the experiment, as shown in FIG. 6B, the dead time L2 reduces as the air amount GA increases. This is because, as the air amount GA increases, the basic post injection amount QPbase increases, and the amount of energy that is input to the DOC 52 (thus, the DPF 53) increases. Furthermore, the dead time L2 increases as the ash amount SASH increases as indicated by lines C2 and C3 in FIG. 6B. This is because, as the ash amount SASH increases, the heat capacity of the DPF 53 increases and a period of time required for exhaust gas to pass through the DPF 53 extends.

Furthermore, as shown in FIG. 7B, the natural frequency ωn2 increases as the air amount GA increases. This corresponds to the fact that, as shown in FIG. 8B, a time constant Td2 in the case where the second temperature sensor model is constructed by a first order lag approximation equation reduces as the air amount GA increases (that is, the second temperature sensor detected temperature T2act relatively early increases). Furthermore, the natural frequency ωn2 reduces as the ash amount SASH increases as indicated by lines C2 and C3 in FIG. 7B. This corresponds to that, as indicated by the lines C2 and C3 in FIG. 8B, the time constant Td2 in the case where the second temperature sensor model is constructed by a first order lag approximation equation increases as the ash amount SASH increases (that is, the second temperature sensor detected temperature T2act relatively later increases). This is because the heat capacity of the DPF 53 increases as the ash amount SASH increases.

On the basis of the above viewpoint, the second temperature sensor target detected temperature computing unit B6 acquires the dead time L2 by applying the actual air amount GA and the actual ash amount SASH to a table shown in FIG. 6B, and then substitutes the dead time L2 into the dead time L in the above-described mathematical expression (1). Furthermore, the second temperature sensor target detected temperature computing unit B6 acquires the natural frequency ωn2 by applying the actual air amount GA and the actual ash amount SASH to a table shown in FIG. 7B, and then substitutes the natural frequency ωn2 into the natural frequency ωn in the above-described mathematical expression (1). Thus, the second temperature sensor target detected temperature T2tgt is calculated. The second temperature sensor target detected temperature T2tgt is a target value of the second temperature sensor detected temperature T2act, which varies with a lapse of time from time point at which the DPF regeneration start condition is satisfied.

Referring back to FIG. 2, a temperature conversion unit B7 converts the output value VT2 of the second temperature sensor 66 to the second temperature sensor detected temperature T2act using the function f. According to the function f, as the output value VT2 increases, the second temperature sensor detected temperature T2act becomes a higher value.

A second feedback controller B8 calculates a second feedback amount KFB2 of the post fuel injection amount QP in accordance with proportional plus integral (PI) control such that the second temperature sensor detected temperature T2act coincides with the second temperature sensor target detected temperature T2tgt. That is, the second feedback controller B8 calculates the second feedback amount KFB2 in accordance with the following mathematical expression (3). In the mathematical expression (3), ΔT2 is a value obtained by subtracting the second temperature sensor detected temperature T2act from the second temperature sensor target detected temperature T2tgt (ΔT2 = second temperature sensor target detected temperature T2tgt - second temperature sensor detected temperature T2act).

$$KFB2 = Kp2 \cdot \Delta T2 + Ki2 \cdot \int \Delta T2 dt \cdots (3)$$

The integral gain (integral constant) Ki2 in the above mathematical expression (3) is set so as to increase as the air amount GA increases and to reduce as the ash amount SASH increases as shown in FIG. 9B. Similarly, the proportional gain (proportional constant) Kp2 in the above-described mathematical expression (3) is set so as to increase as the air amount GA increases and to reduce as the ash amount SASH increases as shown in FIG. 10B. The reason why the control gains in feedback control (control parameters in feedback control), such as the integral gain and the proportional gain, are set so as to reduce as the ash amount SASH increases is to avoid divergence of feedback control due to an increase in the heat capacity of the DPF 53 as the ash amount SASH increases. However, these control gains just need to be determined so as to be appropriate for the ash amount SASH, and may be set so as to increase as the ash amount SASH increases.

The thus calculated first feedback amount KFB1 and second feedback amount KFB2 are input to a feedback amount determination unit B9 shown in FIG. 2. The feedback amount determination unit B9 employs one of the feedback amounts KFB1 and KFB2 as a final feedback amount KFB, and outputs the final feedback amount KFB. More specifically, when the air amount GA is smaller than or equal to the threshold GAth, the feedback amount determination unit B9 employs the first feedback amount KFB1 as the final feedback amount KFB. In contrast to this, when the air amount GA is larger than the threshold GAth, the feedback amount determination unit B9 employs the second feedback amount KFB2 as the final feedback amount KFB. The reason will be described below.

FIG. 12 is a graph that shows a difference (deviation temperature) between the actual DPF temperature Tact and the first temperature sensor detected temperature T1act with respect to an air amount GA when the first temperature sensor detected temperature T1act is a predetermined temperature (for example, 500°C). The solid line C1 indicates a designed value of the difference between the actual DPF temperature Tact and the first temperature sensor detected temperature T1act. The broken line C2 indicates a variation upper limit of the difference between the actual DPF temperature Tact and the first temperature sensor detected temperature T1act, and the broken line C3 indicates a variation lower limit of the difference.

According to the graph, when the air amount GA is smaller than or equal to the threshold GAth, the variation upper limit and the variation lower limit both are close to the designed value. In contrast to this, when the air amount GA is larger than the threshold GAth, the variation lower limit is close to the designed value; however, the variation upper limit significantly deviates from the designed value. This is because unburned components that cannot be burned in the DOC 52 increase when the air amount GA is large, so the unburned components are burned in the DPF 53 to generate heat.

FIG. 13 is a graph that shows a difference (deviation temperature) between the actual DPF temperature Tact and the second temperature sensor detected temperature T2act with respect to an air amount GA when the second temperature sensor detected temperature T2act is a predetermined temperature (for example, 500°C). The solid line C1 indicates a designed value of the difference between the actual DPF temperature Tact and the second temperature sensor detected temperature T2act. The broken line C2 indicates a variation upper limit of the difference between the actual DPF temperature Tact and the second temperature sensor detected temperature T2act, and the broken line C3 indicates a variation lower limit of the difference. As is apparent from FIG. 13, irrespective of the air amount GA, the variation upper limit and the variation lower limit both are close to the designed value.

In contrast to this, as can be understood from FIG. 6A and FIG. 6B, the dead time L1 of the first temperature sensor 65 is shorter than the dead time L2 of the second temperature sensor 66. However, the dead time L2 of the second temperature sensor 66 reduces as the air amount GA increases. Furthermore, as can be understood from FIG. 7A and FIG. 7B, the natural frequency ωn1 of the first temperature sensor 65 is higher than the natural frequency ωn2 of the second temperature sensor 66. However, the natural frequency ωn2 of the second temperature sensor 66 increases as the air amount GA increases.

Thus, when the air amount GA is smaller than or equal to the threshold air amount GAth, the first temperature sensor detected temperature T1act does not significantly deviate from the actual DPF temperature Tact and is more advantageous in feedback control in terms of dead time and natural frequency than the second temperature sensor detected temperature T2act. On the other hand, when the air amount GA is larger than the threshold air amount GAth, the first temperature sensor detected temperature T1act can significantly deviate from the actual DPF temperature Tact; whereas the second temperature sensor detected temperature T2act does not significantly deviate from the actual DPF temperature Tact. Furthermore, when the air amount GA is larger than the threshold air amount GAth, the dead time L2 and the natural frequency ωn2 do not reach a level that becomes problematic in feedback control.

Then, the feedback amount determination unit B9 employs the first feedback amount KFB1 as the final feedback amount KFB when the air amount GA is smaller than or equal to the threshold GAth, and employs the second feedback amount KFB2 as the final feedback amount KFB when the air amount GA is larger than the threshold GAth.

Referring back to FIG. 2, the feedback amount KFB output from the feedback amount determination unit B9 is multiplied by the basic post injection amount QPbase, and the resultant product (QPbase•KFB) is employed as a final post fuel injection amount QP. That is, fuel of the post fuel injection amount QP is injected from each of the fuel injection valve 31 in the post injection period near the expansion bottom dead center, shown in FIG. 3.

Incidentally, a feedback control prohibition permitting unit B10 determines whether the feedback control conditions are satisfied. Thus, the feedback control prohibition permitting unit B10 determines that the feedback control conditions are not satisfied in a period from when the DPF regeneration start condition is satisfied to the above-described first specific time point. Furthermore, the feedback control prohibition permitting unit B10 determines that the feedback control conditions are not satisfied from when the DPF regeneration start condition is satisfied to the above-described second specific time point.

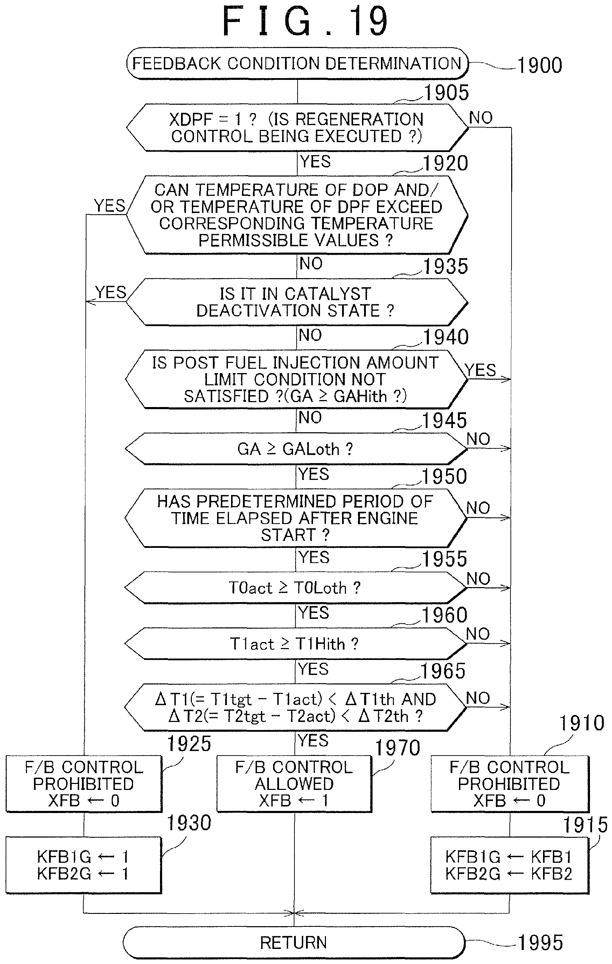

When the feedback control prohibition permitting unit B10 determines that the feedback control conditions are not satisfied, the feedback control prohibition permitting unit B10 prohibits multiplication of the feedback amount KFB output from the feedback amount determination unit B9 by the basic post injection amount QPbase. In other words, when the feedback control conditions are not satisfied, the feedback control prohibition permitting unit B10 replaces the feedback amount KFB output from the feedback amount determination unit B9 with "1" (or a learning value (described later)). When the feedback control prohibition permitting unit B10 determines that the feedback control conditions are satisfied, the feedback control prohibition permitting unit B10 allows calculation of the final post fuel injection amount QP by multiplying the feedback amount KFB output from the feedback amount determination unit B9 by the basic post injection amount QPbase. Note that the feedback control conditions will be described in detail later with reference to FIG. 19. The details of feedback control in regeneration control are described above.

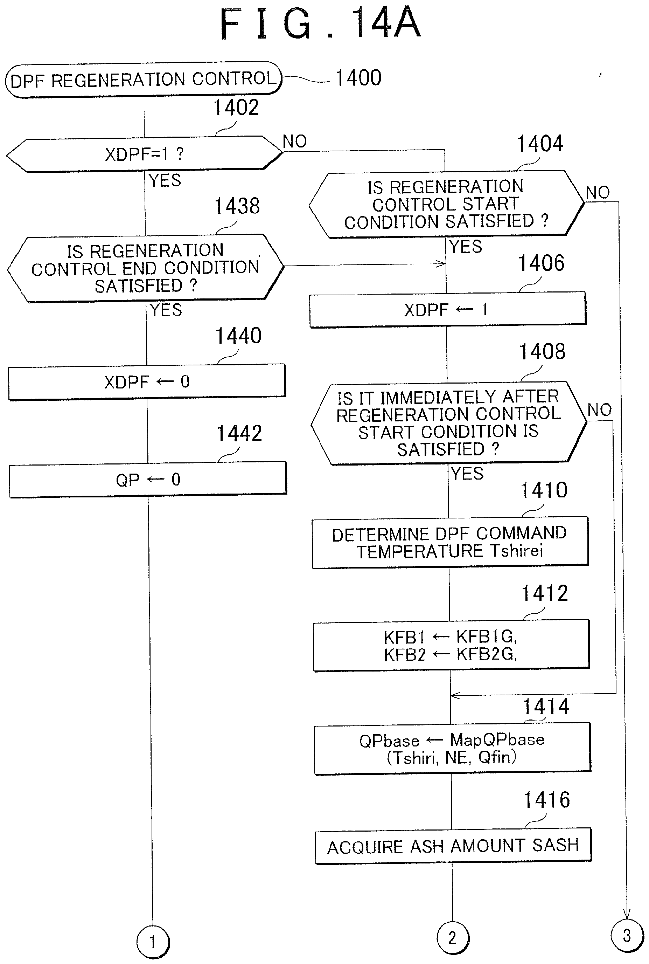

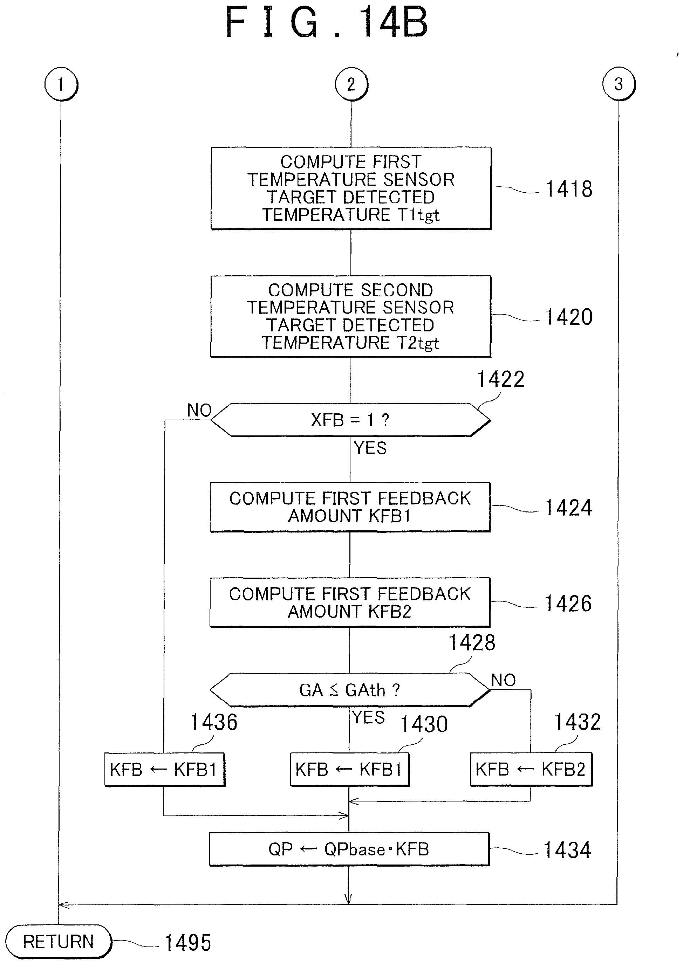

Next, actual operations of the exhaust gas control system 10 will be described. The CPU executes a DPF regeneration control routine shown by the flowchart of FIG. 14A and 14B each time a predetermined period of time elapses. Thus, at a predetermined timing, the CPU starts the process from step 1400 in FIG. 14A and proceeds with the process to step 1402, and then determines whether the value of a regeneration control execution flag XDPF is "1".

The value of the regeneration control execution flag XDPF is set at "0" in an initial routine that is executed when an ignition key switch of the vehicle (not shown) is changed from an off position to an on position. Furthermore, the value of the regeneration control execution flag XDPF is set at "1" in a period during which DPF regeneration control is being executed, as will be described later (see step 1406 and step 1440 in FIG. 14A).

Now it is assumed that DPF regeneration control is not executed and the DPF regeneration control start condition is not satisfied. In this case, the CPU makes negative determination in step 1402 and proceeds with the process to step 1404, and then determines whether the regeneration control start condition is satisfied. According to the above-described assumption, the regeneration control start condition is not satisfied. Thus, the CPU makes negative determination in step 1404, directly proceeds with the process to step 1495, and once ends the routine. Thus, post injection is not carried out.

Next, in the above state, it is assumed that the DPF regeneration control start condition is satisfied. In this case, the CPU makes negative determination in step 1402 and then makes affirmative determination in step 1404, and sequentially executes the processes of step 1406 to step 1420 described below.

In step 1406, the CPU sets the value of the regeneration control execution flag XDPF at "1". In step 1408, the CPU determines whether the present time point is time point immediately after the DPF regeneration control start condition is satisfied. Because the present time point is the time point immediately after the DPF regeneration control start condition is satisfied, the CPU makes affirmative determination in step 1408 and proceeds with the process to step 1410, and determines the DPF command temperature Tshirei on the basis of the PM deposition amount, and the like, as described above.

In step 1412, the CPU respectively stores a first learning value KFB1G and a second learning value KFB2G, which are separately calculated through an FB condition determination routine shown in FIG. 19, as the first feedback amount KFB1 and the second feedback amount KFB2. Subsequently, the CPU proceeds with the process to step 1414. Note that, when the present time point is not the time point immediately after the DPF regeneration control start condition is satisfied, the CPU makes negative determination in step 1408, and directly proceeds with the process to step 1414.

In step 1414, the CPU determines the basic post injection amount QPbase on the basis of the DPF command temperature Tshirei, the engine rotation speed NE and the main fuel injection amount Qfin. Note that the DPF command temperature Tshirei may be a constant value.

In step 1416, the CPU acquires the ash amount SASH. The CPU separately calculates the ash amount SASH through a routine (not shown) in accordance with a known method (for example, see Japanese Patent Application Publication No. 2010-196498 (JP 2010-196498 A)). Simply put, the ash amount SASH increases as the amount of lubricating oil (engine oil) consumed in the engine 20 increases. The amount of consumed lubricating oil increases as the travel distance of the vehicle increases. Then, the CPU calculates the travel distance of the vehicle by integrating the vehicle speed SPD, and calculates the ash amount SASH such that the ash amount SASH increases as the travel distance increases.

Note that, when a known oil level sensor that detects the level (oil level) of lubricating oil stored in an oil pan (not shown) of the body unit 30 is connected to the electrical control unit 60, the CPU may acquire an output value of the oil level sensor before a start of the engine 20, and may calculate the ash amount SASH such that the ash amount SASH increases as the output value decreases.

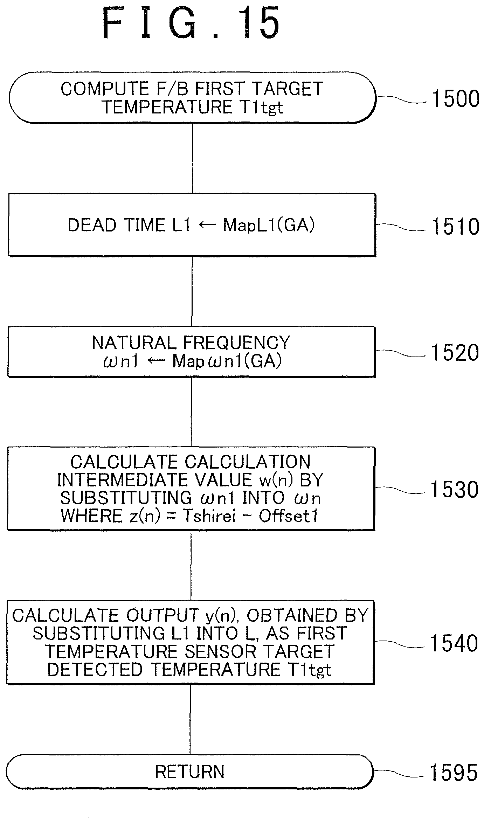

In step 1418, the CPU computes the first temperature sensor target detected temperature T1tgt using the first temperature sensor model as described above. More specifically, the CPU calculates the first temperature sensor target detected temperature T1tgt by executing a routine shown in FIG. 15. That is, when the CPU proceeds with the process to step 1418, the CPU sequentially executes the processes of step 1510 to step 1540 described below, and then proceeds with the process to step 1420 in FIG .14B.

In step 1510, the CPU acquires the dead time L1 by applying the actual air amount GA to the table MapL1(GA) shown in FIG. 6A. In step 1520, the CPU acquires the natural frequency $\omega$n1 by applying the actual air amount GA to the table Map$\omega$n1(GA) shown in FIG .7A.

In step 1530, the CPU calculates a calculation intermediate value w(n) by the following mathematical expressions (4) and (5). In these mathematical expressions, the natural frequency $\omega$n1 is substituted into the natural frequency $\omega$n. In addition, z(n) is the first temperature sensor final target temperature Tlin, and is a value obtained by subtracting the offset value Offset1 from the DPF command temperature Tshirei (T1in = Tshirei - Offsetl). Note that in the mathematical expressions (4) and (5), when there is no last value w(n-1) or last but one value w(n-2), the same adequate initial value (for example, the first temperature sensor detected temperature T1act) is set for these values. These mathematical expressions are mathematical expressions of which a portion related to a second order lag of the first temperature sensor model is discretized. Note that a computation period T is an execution interval of the routine.

Second order lag, discretization

$$\omega(n) = \frac{\omega n^2 \cdot \{z(n) + 2 \cdot z(n-1) + z(n-2)\} - \gamma 1 \cdot w(n-1) - \gamma 2 \cdot w(n-2)}{\gamma 0} \cdots (4)$$

z(n): input (current value), w(n): output (current value), z(n-1): input (last value), w(n-1): output (last value), z(n-2): input (last but one value), and w(n-2): output (last but one value)

$$\left.\begin{array}{l} \gamma 0 = \omega n^2 + 4 \cdot \zeta \cdot \dfrac{\omega n}{T} + \dfrac{4}{T^2} \\[2mm] \gamma 1 = 2 \cdot \omega n^2 - \dfrac{8}{T^2} \\[2mm] \gamma 2 = \omega n^2 - 4 \cdot \zeta \cdot \dfrac{\omega n}{T} + \dfrac{4}{T^2} \end{array}\right\} \cdots (5)$$

$\zeta$: attenuation coefficient, $\omega$n: natural frequency, and T: execution interval

In step 1540, the CPU calculates a value y(n) as the first temperature sensor target detected temperature T1tgt by the following mathematical expressions (6) and (7). In the mathematical expressions (6) and (7), the dead time L1 is substituted into the dead time L. Note that, in the mathematical expressions (6) and (7), when there is no last value y(n-1) or last but one value y(n-2), the same initial value (for example, the first temperature sensor detected temperature T1act) is set for these values. These mathematical expressions are mathematical expressions of which a portion related to a dead time of the first temperature sensor model is discretized.

Dead time, discretization

$$y(n) = \frac{\beta 0 \cdot w(n) + \beta 1 \cdot w(n-1) + \beta 2 \cdot w(n-2) - \alpha 1 \cdot y(n-1) - \alpha 2 \cdot y(n-2)}{\alpha 0} \cdots (6)$$

w(n): input (current value), y(n): output (current value), w(n-1): input (last value), y(n-1): output (last value), w(n-2): input (last but one value), and y(n-2): output (last but one value)

$$\alpha 0 = 1 + \frac{L}{T} + \frac{1}{3} \cdot \left(\frac{L}{T}\right)^2$$

$$\alpha 1 = 2 - \frac{2}{3} \cdot \left(\frac{L}{T}\right)^2$$

$$\alpha 2 = 1 - \frac{L}{T} + \frac{1}{3} \cdot \left(\frac{L}{T}\right)^2 \Bigg\} \cdots (7)$$

$$\beta 0 = \alpha 2$$

$$\beta 1 = \alpha 1$$

$$\beta 2 = \alpha 0$$

L: dead time, and T: execution interval

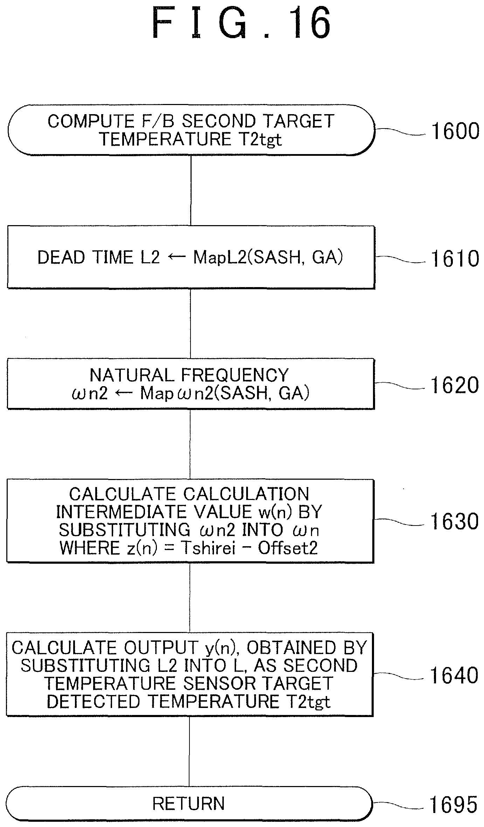

In step 1420, the CPU calculates the second temperature sensor target detected temperature T2tgt using the above-described second temperature sensor model. More specifically, the CPU calculates the second temperature sensor target detected temperature T2tgt by executing a routine shown in FIG. 16. That is, when the CPU proceeds with the process to step 1420, the CPU sequentially executes the processes of step 1610 to step 1640 described below, and then proceeds with the process to step 1422 in FIG. 14B.

In step 1610, the CPU acquires the dead time L2 by applying the actual ash amount SASH and the actual air amount GA to the table MapL2(SASH, GA) shown in FIG. 6B. In step 1620, the CPU acquires the natural frequency $\omega n2$ by applying the actual ash amount SASH and the actual air amount GA to the table Map$\omega$n2(SASH, GA) shown in FIG. 7B.

In step 1630, the CPU calculates a calculation intermediate value w(n) by the above-described mathematical expressions (4) and (5). In these mathematical expressions, the natural frequency $\omega n2$ is substituted into the natural frequency $\omega n$. In addition, z(n) is the second temperature sensor final target temperature T2in, and is a value obtained by subtracting the offset value Offset2 from the DPF command temperature Tshirei (T2in = Tshirei - Offset2). As a result, these mathematical expressions are mathematical expressions of which a portion related to a second order lag of the second temperature sensor model is discretized.

In step 1640, the CPU calculates a value y(n) as the second temperature sensor target detected temperature T2tgt by the above-described mathematical expressions (6) and (7). In these mathematical expressions, the dead time L2 is substituted into the dead time L. As a result, these mathematical expressions are mathematical expressions of which a portion related to a dead time of the second temperature sensor model is discretized. After that, the CPU proceeds with the process to step 1422 in FIG. 14B.

The CPU determines in step 1422 whether the value of a feedback control condition satisfaction flag XFB (hereinafter, referred to as "FB condition satisfaction flag XFB") is "1". When the value of the FB condition satisfaction flag XFB is "1", it indicates that the feedback control condition is satisfied. When the value of the FB condition satisfaction flag XFB is "0", it indicates that the feedback control condition is not satisfied. The value of the FB condition satisfaction flag XFB is changed through the FB condition determination routine shown in FIG. 19 (described later). Furthermore, the value of the FB condition satisfaction flag XFB is set at "0" in the above-described initial routine.

At this time, when the value of the FB condition satisfaction flag XFB is "1", the CPU makes affirmative determination in step 1422, sequentially executes the processes of step 1424 and step 1426 described below, and proceeds with the process to step 1428.

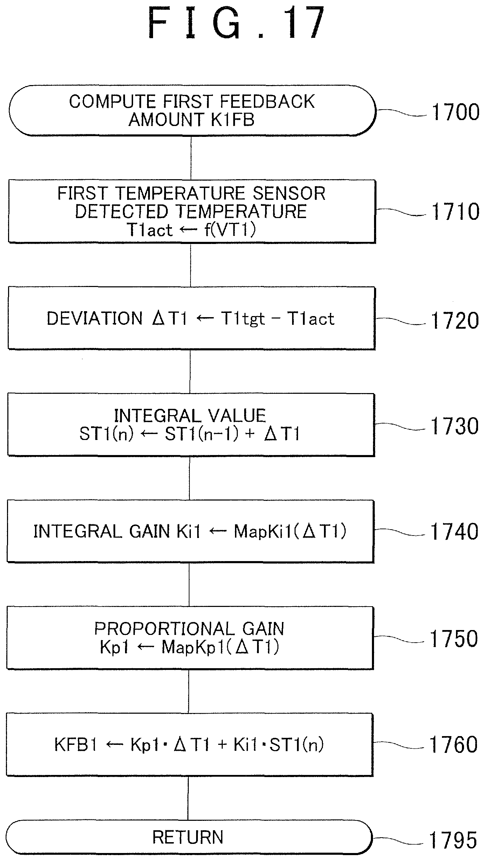

In step 1424, the CPU computes the first feedback amount KFB1 in accordance with PI control as described above. More specifically, the CPU calculates the first feedback amount KFB1 by executing a routine shown in FIG. 17. That is, when the CPU proceeds with the process to step 1424, the CPU sequentially executes the processes of step 1710 to step 1760 described below, and then the CPU proceeds with the process to step 1426 in FIG. 14B.

In step 1710, the CPU converts the output value VT1 of the first temperature sensor 65 to the first temperature sensor detected temperature T1act using the function f. In step 1720, the CPU calculates a deviation $\Delta T1$ by subtracting the first temperature sensor detected temperature T1act from the first temperature sensor target detected temperature T1tgt. In step 1730, the CPU calculates a current integral value ST1(n) by adding the deviation $\Delta T1$ obtained in step 1720 to the last integral value ST1(n-1) (integral value at that time point). Note that the initial value of the integral value ST1 is "0".

In step 1740, the CPU acquires the integral gain Ki1 by applying the actual air amount GA to the table MapKi1(GA) shown in FIG. 9A. In step 1750, the CPU acquires the proportional gain Kp1 by applying the actual air amount GA to the table MapKp1(GA) shown in FIG. 10A.

In step 1760, the CPU calculates the first feedback amount KFB1 in accordance with a mathematical expression described in step 1760. This mathematical expression corresponds to the above-described mathematical expression (2). After that, the CPU proceeds with the process to step 1426 in FIG. 14B.

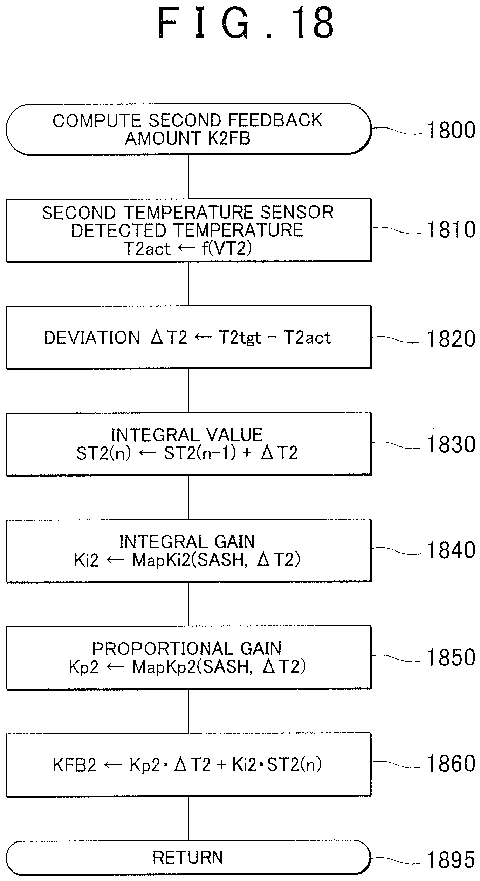

In step 1426, the CPU computes the second feedback amount KFB2 in accordance with the above-described PI control. More specifically, the CPU calculates the second feedback amount KFB2 by executing a routine shown in FIG. 18. That is, when the CPU proceeds with the process to step 1426, the CPU sequentially executes the processes of step 1810 to step 1860 described below, and then proceeds with the process to step 1428 in FIG. 14B.

In step 1810, the CPU converts the output value VT2 of the second temperature sensor 66 to the second temperature sensor detected temperature T2act using the function f. In step 1820, the CPU calculates a deviation ΔT2 by subtracting the second temperature sensor detected temperature T2act from the second temperature sensor target detected temperature T2tgt. In step 1830, the CPU calculates a current integral value ST2(n) by adding the deviation ΔT2 obtained in step 1820 to a last integral value ST2(n-1) (integral value at that time point). Note that the initial value of the integral value ST2 is "0".

In step 1840, the CPU acquires the integral gain Ki2 by applying the actual ash amount SASH and the actual air amount GA to the table MapKi2(SASH, GA) shown in FIG. 9B. In step 1850, the CPU acquires the proportional gain Kp2 by applying the actual ash amount SASH and the actual air amount GA to the table MapKp2(SASH, GA) shown in FIG. 10B.

In step 1860, the CPU calculates the second feedback amount KFB2 in accordance with a mathematical expression described in step 1860. This mathematical expression corresponds to the above-described mathematical expression (3). After that, the CPU proceeds with the process to step 1428 in FIG. 14B.

In step 1428, the CPU determines whether the air amount GA is smaller than or equal to the threshold air amount GAth. At this time, when the air amount GA is smaller than or equal to the threshold air amount GAth, the CPU proceeds with the process to step 1430, and stores the first feedback amount KFB1 as the feedback amount KFB. In contrast to this, when the air amount GA is larger than the threshold air amount GAth, the CPU proceeds with the process to step 1432 and then stores the second feedback amount KFB2 as the feedback amount KFB.

In step 1434, the CPU obtains the final post fuel injection amount QP by multiplying the basic post injection amount QPbase by the feedback amount KFB, and causes each fuel injection valve 31 to inject fuel of the post fuel injection amount QP in the post injection period of a corresponding one of the cylinders. As a result, the actual DPF temperature Tact accurately and quickly gets close to the DPF command temperature Tshirei, so DPF regeneration control is smoothly executed.

On the other hand, at the time point at which the CPU executes the process of step 1422, when the value of the FB condition satisfaction flag XFB is "0", the CPU makes negative determination in step 1422 and proceeds with the process to step 1436, and then sets the feedback amount KFB at "1". Subsequently, the CPU proceeds with the process to step 1434.

As is apparent from the above description, when the value of the FB condition satisfaction flag XFB is "0", the processes of step 1424 and step 1426 are not executed, and the feedback amount KFB is set at "1" through the process of step 1436. Thus, neither first feedback control that uses the first feedback amount KFB1 nor second feedback control that uses the second feedback amount is executed. In other words, when the value of the FB condition satisfaction flag XFB is "0", feedback control over the post fuel injection amount QP using the output values of the temperature sensors (the first temperature sensor 65 and the second temperature sensor 66) is prohibited.

In this state, it is assumed that a DPF regeneration control end condition is satisfied. The DPF regeneration control end condition is, for example, satisfied when the PM deposition amount becomes smaller than or equal to a control end permission amount PMend that is smaller than the control start permission amount PMth. Alternatively, the DPF regeneration control end condition is satisfied at the time point at which a predetermined period of time has elapsed from the time point at which DPF regeneration control is started.

When the DPF regeneration control end condition is satisfied, the CPU makes affirmative determination in step 1438 subsequent to step 1402 and proceeds with the process to step 1440, and then sets the value of the regeneration control execution flag XDPF at "0". Subsequently, the CPU proceeds with the process to step 1442, sets the value of the post fuel injection amount QP at "0", and then proceeds with the process to step 1495 and once ends the routine. Thus, DPF regeneration control ends.

Furthermore, as described above, the CPU is configured to execute the FB condition determination routine shown in the flowchart of FIG. 19 each time a predetermined period of time elapses. Thus, at a predetermined timing, the CPU starts the process from step 1900 in FIG. 19 and proceeds with the process to step 1905, and then determines whether the value of the regeneration control execution flag XDPF is "1".

At this time, when the value of the regeneration control execution flag XDPF is "0" (that is, when DPF regeneration control is not started), the CPU makes negative determination in step 1905 and proceeds with the process to step 1910, and then sets the value of the FB condition satisfaction flag XFB at "0". Thus, feedback control over the post fuel injection amount QP using the output values of the temperature sensors (the first temperature sensor 65 and the second temperature sensor 66) is prohibited.

Subsequently, the CPU proceeds with the process to step 1915, stores the first feedback amount KFB1 at that time point in the learning value KFB1G (first learning value KFB1G) of the first feedback amount KFB, and stores the second feedback amount KFB2 at that time point in the learning value KFB2G (second learning value KFB2G) of the second feedback amount KFB. After that, the CPU proceeds with the process to step 1995, and once ends the routine.

On the other hand, at the time point at which the CPU executes the process of step 1905, when the value of the regeneration control execution flag XDPF is "1", the CPU makes affirmative determination in step 1905 and proceeds with the process to step 1920, and then determines whether the temperature of the DOP 52 and/or the temperature of the DPF 53 can become higher than or equal to corresponding permissible temperatures.

More specifically, in step 1910, the CPU determines whether the first temperature sensor detected temperature T1act is higher than or equal to a first permissible temperature T1OTth, and determines whether the second temperature sensor detected temperature T2act is higher than or equal to a second permissible temperature T2OTth.

At this time, when the first temperature sensor detected temperature T1act is higher than or equal to the first permissible temperature T1OTth and/or when the second temperature sensor detected temperature T2act is higher than or equal to the second permissible temperature T20Tth, the CPU makes affirmative determination in step 1920 and proceeds with the process to step 1925, and then sets the value of the FB condition satisfaction flag XFB at "0". Thus, feedback control over the post fuel injection amount QP using the output values of the temperature sensors (the first temperature sensor 65 and the second temperature sensor 66) is prohibited.

Subsequently, the CPU proceeds with the process to step 1930, stores "1" in the first learning value KFB1G, and stores "1" in the second learning value KFB2G. After that, the CPU proceeds with the process to step 1995, and once ends the routine. The reason why the learning values each are set at "1" in this way is because it is useless that the feedback amounts (KFB1, KFB2) in the case where the temperature of the DOP 52 and/or the temperature of the DPF 53 can become higher than or equal to the corresponding permissible temperatures are held as learning values. After that, the CPU proceeds with the process to step 1995, and once ends the routine.

On the other hand, at the time point at which the CPU executes the process of step 1920, when the first temperature sensor detected temperature T1act is lower than the first permissible temperature T1OTth and the second temperature sensor detected temperature T2act is lower than the second permissible temperature T2OTth, the CPU makes negative determination in step 1920 and proceeds with the process to step 1935, and then determines whether it is in a catalyst deactivation state.

The catalyst deactivation state means a state where the temperature of the DOC 52 and/or the temperature of the DPF 53 do not increase even when post fuel injection is carried out, that is, a state where these DOC 52 and DPF 53 are deactivated. More specifically, when the second temperature sensor detected temperature T2act at the time when a predetermined period of time has elapsed from the time point at which DPF regeneration control is started is lower than a permissible lower limit in step 1920, the CPU determines that it is in a catalyst deactivation state.

When the CPU determines in step 1935 that it is in a catalyst deactivation state, the CPU proceeds with the process from step 1935 to step 1925 and step 1930. Thus, feedback control is prohibited. In addition, the feedback amounts (KFB1, KFB2) are not held as the learning values (KFB1G, KFB2G).

On the other hand, at the time point at which the CPU executes the process of step 1935, when it is not in a catalyst deactivation state, the CPU makes negative determination in step 1935 and proceeds with the process to step 1940, and then determines whether a condition to limit the post fuel injection amount is not satisfied. The condition to limit the post fuel injection amount is satisfied when white smoke is highly likely to be generated. Specifically, when the air amount GA is smaller than a predetermined upper limit GAHith, it is determined that the condition to limit the post fuel injection amount is not satisfied; whereas, when the air amount GA is larger than or equal to the upper limit GAHith, it is determined that the condition to limit the post fuel injection amount is satisfied.

Thus, when the air amount GA is larger than or equal to the predetermined upper limit GAHith, the CPU makes affirmative determination in step 1940 and proceeds with the process to step 1910 and step 1915. As a result, feedback control is prohibited. In addition, the feedback amounts (KFB1, KFB2) are respectively stored as the learning values (KFB1G, KFB2G).

On the other hand, at the time point at which the CPU executes the process of step 1940, when the air amount GA is smaller than the upper limit GAHith, the CPU makes negative determination in step 1940 and proceeds with the process to step 1945, and then determines whether the air amount GA is larger than or equal to a predetermined lower limit GALoth. The lower limit GALoth is, of course, smaller than the upper limit GAHith.

At this time, when the air amount GA is smaller than the lower limit GALoth, the above-described dead time is remarkably long, and the natural frequency $\omega n$ is remarkably low. Thus, in such a case, it is not desirable to execute the above-described feedback control. Then, when the air amount GA is smaller than the lower limit GALoth, the CPU makes negative determination in step 1945 and proceeds with the process to step 1910 and step 1915.

On the other hand, at the time point at which the CPU executes the process of step 1945, when the air amount GA is larger than or equal to the lower limit GALoth, the CPU makes affirmative determination in step 1945 and proceeds with the process to step 1950, and then determines whether the present time point is a time point at which a predetermined period of time or longer has elapsed after the engine 20 is started. At this time, when the predetermined period of time or longer has not elapsed after the engine 20 is started, the CPU makes negative determination in step 1950 and proceeds with the process to step 1910 and step 1915.

On the other hand, at the time point at which the CPU executes the process of step 1950, when the predetermined period of time or longer has elapsed after the engine 20 is started, the CPU makes affirmative determination in step 1950 and proceeds with the process to step 1955, and then determines whether the upstream temperature detected value T0act based on the output value VT0 of the upstream temperature sensor 64 is higher than or equal to an upstream temperature lower limit T0Loth.

When the upstream temperature detected value T0act is lower than the upstream temperature lower limit T0Loth, the temperature of the exhaust pipe is extremely low, so a large amount of fuel adheres to the exhaust pipe when post fuel injection is carried out. Therefore, the first temperature sensor detected temperature T1act and the second temperature sensor detected temperature T2act do not increase, and, as a result, the first and second feedback amounts may be excessive. Furthermore, a large amount of fuel adherent to the exhaust pipe may flow into the DOC 52 at certain time point.

Then, when upstream temperature detected value T0act is lower than the upstream temperature lower limit T0Loth, the CPU makes negative determination in step 1955 and proceeds with the process to step 1910 and step 1915, and then prohibits feedback control.

On the other hand, at the time point at which the CPU executes the process of step 1955, when the upstream temperature detected value T0act is higher than or equal to the upstream temperature lower limit T0Loth, the CPU makes affirmative determination in step 1955 and proceeds with the process to step 1060, and then determines whether the first temperature sensor detected temperature T1act is higher than or equal to a predetermined temperature threshold T1Hith.

When the first temperature sensor detected temperature T1act is lower than the temperature threshold T1Hith, a difference between the first temperature sensor detected temperature T1act and the first temperature sensor final target temperature T1in immediately after a start of feedback control (first feedback control) extremely increases. In such a case, it is not desirable to execute first feedback control.

Then, when the first temperature sensor detected temperature T1act is lower than the temperature threshold T1Hith, the CPU makes negative determination in step 1960 and proceeds with the process to step 1910 and step 1915, and then prohibits feedback control.

On the other hand, at the time point at which the CPU executes the process of step 1960, when the first temperature sensor detected temperature T1act is higher than or equal to the temperature threshold T1Hith, the CPU makes affirmative determination in step 1960 and proceeds with the process to step 1965, and then determines whether both the following first temperature correlated condition and second temperature correlated condition are satisfied.

(First temperature correlated condition) The difference ($\Delta$T1 = T1in - T1tgt) between the first temperature sensor target detected temperature T1tgt and the first temperature sensor detected temperature T1act is smaller than the first threshold temperature difference $\Delta$T1th.

(Second temperature correlated condition) The difference ($\Delta$T2 = T2in - T2tgt) between the second temperature sensor target detected temperature T2tgt and the second temperature sensor detected temperature T2act is smaller than the second threshold temperature difference $\Delta$T2th.

As is described with reference to FIG. 20, when the first temperature correlated condition is not satisfied, the accuracy of the first temperature sensor target detected temperature T1tgt that is calculated through the first temperature sensor model is not high. Similarly, when the second temperature correlated condition is not satisfied, the accuracy of the second temperature sensor target detected temperature T2tgt that is calculated through the second temperature sensor model is not high.

Then, when at least one of the first temperature correlated condition and the second temperature correlated condition is not satisfied, the CPU makes negative determination in step 1965 and then proceeds with the process to step 1910 and step 1915. As a result, feedback control over the post fuel injection amount QP using the output values of the temperature sensors (the first temperature sensor 65 and the second temperature sensor 66) is prohibited.

On the other hand, at the time point at which the CPU executes the process of step 1965, when both the first temperature correlated condition and the second temperature correlated condition are satisfied, the CPU makes affirmative determination in step 1965 and proceeds with the process to step 1970, and then sets the value of the FB condition satisfaction flag XFB at "1". As a result, the processes of adequate steps among step 1424 to step 1432 in FIG. 14B are executed, so feedback control over the post fuel injection amount QP using the output values of the temperature sensors (the first temperature sensor 65 and the second temperature sensor 66) is allowed and executed.

Note that it is found that, after the time point at which the DPF regeneration start condition is satisfied, an amplitude $\Delta W1$ (a difference between the temperature at point P1 and the temperature at point P3 in FIG. 20) in which the first temperature sensor model fluctuates varies on the basis of the dead time L1 and a difference SA1 between the first temperature sensor final target temperature T1in and the first temperature sensor detected temperature T1act at the time point at which the regeneration start condition is satisfied. Thus, it is applicable that the amplitude $\Delta W1$ is obtained on the basis of the dead time L1 that is acquired from the air amount GA and the table shown in FIG. 6A and the difference SA1 and then a value (or a value smaller than or equal to that value) obtained by subtracting half ($\Delta W1/2$) of the amplitude $\Delta W1$ from the first temperature sensor final target temperature T1in is acquired as the first threshold temperature difference $\Delta T1th$.

Similarly, it is found that, after the time point at which the DPF regeneration start condition is satisfied, an amplitude $\Delta W2$ in which the second temperature sensor model fluctuates varies on the basis of the dead time L2 and a difference SA2 between the second temperature sensor final target temperature T2in and the second temperature sensor detected temperature T2act at the time point at which the regeneration start condition is satisfied. Thus, it is applicable that the amplitude $\Delta W2$ is obtained on the basis of the dead time L2 that is acquired from the air amount GA, the ash amount SASH and the table shown in FIG. 6B and the difference SA2 and then a value (or a value smaller than or equal to that value) obtained by subtracting half ($\Delta W2/2$) of the amplitude $\Delta W2$ from the second temperature sensor final target temperature T2in is acquired as the second threshold temperature difference $\Delta T2th$.

Furthermore, the CPU may monitor the first temperature sensor target detected temperature T1tgt that is calculated through the first temperature sensor model after the time point at which the DPF regeneration start condition is satisfied, obtain a local maximum value (see point P1 in FIG. 20) of the first temperature sensor target detected temperature T1tgt, which appears for the first time after the time point at which the regeneration start condition is satisfied, and employ a difference between the local maximum value and the first temperature sensor final target temperature T1in (or a value based on the difference and smaller than or equal to the difference) as the first threshold temperature difference $\Delta T1th$.

Similarly, the CPU may monitor the second temperature sensor target detected temperature T2tgt that is calculated through the second temperature sensor model after the time point at which the DPF regeneration start condition is satisfied, obtain a local maximum value of the second temperature sensor target detected temperature T2tgt, which appears for the first time after the time point at which the regeneration start condition is satisfied, and employ a difference between the local maximum value and the second temperature sensor final target temperature T2in (or a value based on the difference and smaller than or equal to the difference) as the second threshold temperature difference $\Delta T2th$.

As described above, regeneration control means for regenerating the DPF 53 of the exhaust gas control system 10 includes feedforward means (see B2 in FIG. 2 and step 1414 in FIG. 14A) and feedback means (see B1, B3, B5, B6, B8 and B9 in FIG. 2 and step 1410, step 1412, and step 1418 to step 1434 in FIG. 14A and 14B). The feedforward means supplies energy of a predetermined feedforward amount to the particulate filter such that the temperature of the particulate filter coincides with the command temperature after the time point at which the regeneration start condition is satisfied. The feedback means executes feedback control over the amount of energy such that a selected one of the sensor detected temperatures coincides with a final target temperature that is determined on the basis of the command temperature after the time point at which the regeneration start condition is satisfied. In addition, the feedback means includes target detected temperature calculation means (see B3 and B6 in FIG. 2 and step 1418 and step 1420 in FIG. 14B, FIG. 15, FIG. 16, and the like), feedback control means (see B5, B6 and B9 in FIG. 2, step 1424 and step 1426 in FIG. 14B, FIG. 17, FIG. 18, and the like) and feedback control prohibition permitting means (see B10 in FIG. 2, step 1422 and step 1436 in FIG. 14B, and step 1965, step 1970 and step 1910 in FIG. 19). The target detected temperature calculation means calculates the sensor target detected temperature according to a period of time elapsed from the time point at which the regeneration start condition is satisfied by (i) estimating the sensor detected temperature for a period of time elapsed from the time point at which the regeneration start condition is satisfied in the case where energy of the feedforward amount is supplied to the particulate filter from the time point at which the regeneration start condition is satisfied, based on the final target temperature and (ii) using the temperature sensor models (the first temperature sensor model and the second temperature sensor model), each of which generates the estimated sensor detected temperature as a sensor target detected temperature that is a target value in the feedback control. The feedback control means executes the feedback control by controlling the amount of energy applied to the particulate filter such that the sensor target detected temperatures respectively coincide with the sensor detected temperatures. The feedback control prohibition permitting means prohibits execution of the feedback control that uses the sensor target detected temperatures until the specific time point (time point at which the first temperature correlated condition and the second temperature correlated condition are satisfied) at which a predetermined period of time elapses from the time point at which the regeneration start condition is satisfied, and allows execution of the feedback control after the specific time point.

Thus, in a period during which the accuracy of estimating the sensor target detected temperatures that are calculated by the respective sensor models, feedback control over the post fuel injection amount based on the sensor target detected temperatures is prohibited, and, after that, feedback control over the post fuel injection amount based on the sensor target detected temperatures is executed after the time point at which the accuracy of estimating the sensor target detected temperatures is high, so it is possible to control the temperature of the DPF 53 to a value close to a target.

The aspect of the invention is not limited to the above-described embodiment; various alternative embodiments may be employed within the scope of the invention. For example, the above-described second temperature sensor model changes the dead time and the natural frequency on the basis of the air amount GA and the ash amount SASH; instead, the second temperature sensor model may change the dead time and the natural frequency on the basis of only the air amount GA. Furthermore, in PI control for calculating the second feedback amount, the feedback control constants (the integral gain Ki2, the proportional gain Kp2, and the like) are changed on the basis of the air amount GA and the ash amount SASH; instead, the feedback control constants may be changed on the basis of only the air amount GA.

Furthermore, energy (thermal energy) applied to the DPF 53 in DPF regeneration control may be not only changed by the post fuel injection amount but also any one or a combination of two or more of retarding the injection timing of the main fuel injection amount, changing the opening degree of the intake throttle valve 42, changing an EGR amount in the case where the engine 20 includes an EGR system and changing an additive fuel amount supplied from a fuel adding valve in the case where the engine 20 includes the fuel adding valve immediately upstream of the DOC 52.

Furthermore, the first temperature sensor model and the second temperature sensor model each are constructed by Pade approximation (second order); instead, the first temperature sensor model and the second temperature sensor model each may be constructed on the basis of an approximation expression that expresses a dead time and a lag (for example, Laguerre approximation expression, Katz approximation expression, or the like). Furthermore, the DPF 53 may support an oxidation catalyst. In this case, the DOC 52 may be omitted.

In addition, in the above-described embodiment, one of the first feedback amount KFB1 and the second feedback amount KFB2 is employed as the final feedback amount KFB; instead, only one of the first feedback amount KFB1 and the second feedback amount KFB2 may be used as the final feedback amount KFB. In other words, feedback control over the post fuel injection amount may be executed using only one of the first temperature sensor 65 and the second temperature sensor 66.

Furthermore, the specific time point at which feedback control is allowed in the above-described embodiment may be specified as time point at which a predetermined period of time has elapsed from the time point at which DPF regeneration control is started (time point at which the DPF control start condition is satisfied). In this case, the predetermined period of time may be determined on the basis of the dead times (L1, L2).

Furthermore, it is applicable that, after the time point at which regeneration control is started (the time point at which the DPF control start condition is satisfied), the first temperature sensor target detected temperature T1tgt is monitored, and the time point at which the first temperature sensor target detected temperature T1tgt returns to the first temperature sensor detected temperature T1act (= T0) at the time point at which regeneration control is started after it is confirmed that the first temperature sensor target detected temperature T1tgt passes through the local maximum value (point P1 in FIG. 20) and subsequently passes through the local minimum value (point P3) is detected as the above-described specific time point related to the first temperature sensor.

Similarly, it is applicable that, after the time point at which regeneration control is started (the time point at which the DPF control start condition is satisfied), the second temperature sensor target detected temperature T2tgt is monitored, and the time point at which the second temperature sensor target detected temperature T2tgt returns to the second temperature sensor detected temperature T2act at the time point at which regeneration control is started after it is confirmed that the second temperature sensor target detected temperature T2tgt passes through a local maximum value and subsequently passes through a local minimum value is detected as the above-described specific time point related to the second temperature sensor.

Furthermore, in the above-described embodiment, when both the first temperature correlated condition and the second temperature correlated condition are satisfied, calculation of the first feedback amount KFB1 and the second feedback amount KFB2 is started. Instead, it is applicable that calculation of the first feedback amount KFB1 is started when the first temperature correlated condition is satisfied and, when the second temperature correlated condition is not satisfied at this time point, the first feedback amount KFB1 is employed as the final feedback amount KFB and then feedback control over the post fuel injection amount is started. Similarly, it is applicable that calculation of the second feedback amount KFB2 is started when the second temperature correlated condition is satisfied and, when the first temperature correlated condition is not satisfied at this time point, the second feedback amount KFB2 is employed as the final feedback amount KFB and then feedback control over the post fuel injection amount is started.

**Claims**

**1.** An exhaust gas control system (10) for an internal combustion engine, **characterized by** comprising:

a particulate filter (53) that is arranged in an exhaust passage (50) of the internal combustion engine and that traps particulate contained in exhaust gas from the engine;

a temperature sensor (65, 66) that is arranged in the exhaust passage and that outputs an output value that varies with a temperature of a portion at which the temperature sensor is arranged in the exhaust passage;

a temperature conversion unit (B4, B7) that converts the output value of the temperature sensor to a sensor detected temperature; and

regeneration control means (60) for controlling an amount of energy applied to the particulate filter on the basis of the sensor detected temperature such that a temperature of the particulate filter coincides with a predetermined command temperature after time point at which a regeneration start condition is satisfied, wherein

the exhaust gas control system regenerates the particulate filter by increasing the temperature of the particulate filter to burn the particulate trapped in the particulate filter, the regeneration control means includes

feedforward means (B2) for supplying energy of a predetermined feedforward amount to the particulate filter such that the temperature of the particulate filter coincides with the command temperature after the time point at which the regeneration start condition is satisfied; and

feedback means (B1, B3, B5, B6, B8 and B9) for executing feedback control over an amount of the energy such that the sensor detected temperature coincides with a final target temperature that is a target temperature that is finally determined on the basis of the command temperature after the time point at which the regeneration start condition is satisfied, and

the feedback means includes

target detected temperature calculation means (B3, B6) for calculating a sensor target detected temperature according to a period of time elapsed from the time point at which the regeneration start condition is satisfied by (i) estimating the sensor detected temperature for a period of time elapsed from the time point at which the regeneration start condition is satisfied in the case where energy of the feedforward amount is supplied to the particulate filter from the time point at which the regeneration start condition is satisfied, based on the final target temperature and (ii) using a temperature sensor model for generating the estimated sensor detected temperature as the sensor target detected temperature that is a target value in the feedback control;

feedback control means (B5, B6, B9) for executing the feedback control by controlling the amount of energy applied to the particulate filter such that the sensor target detected temperature coincides with the sensor detected temperature; and

feedback control prohibition permitting means (B10) for prohibiting execution of the feedback control that uses the sensor target detected temperature until specific time point at which a predetermined period elapses from the time point at which the regeneration start condition is satisfied, and allowing execution of the feedback control after the specific time point,

wherein the temperature sensor model is constructed by Pade approximation, and

the specific time point is determined as time point at which a difference between the final target temperature and the sensor target detected temperature changes from a state where the difference is larger than a predetermined threshold temperature difference to a state where the difference is lower than or equal to the threshold temperature difference after the time point at which the regeneration start condition is satisfied.

2. The exhaust gas control system according to claim 1, wherein
the threshold temperature difference is set to a value smaller than or equal to a difference between the final target temperature and a local maximum value of the sensor target detected temperature, which appears for the first time after the time point at which the regeneration start condition is satisfied.

**Patentansprüche**

1. Abgassteuersystem (10), für eine Brennkraftmaschine, **gekennzeichnet durch**
einen Partikelfilter (53), der in einem Auslasskanal (50) der Brennkraftmaschine angeordnet ist und der Partikel einfängt, die im Abgas von der Kraftmaschine enthalten sind;

einen Temperatursensor (65, 66), der in dem Auslasskanal angeordnet ist und der einen Ausgangswert ausgibt, der mit einer Temperatur eines Abschnitts, bei dem der Temperatursensor in dem Auslasskanal angeordnet ist, variiert;

eine Temperaturumsetzeinheit (B4, B7), die den Ausgangswert des Temperatursensors in eine von dem Sensor detektierte Temperatur umsetzt; und

Regenerationssteuermittel (60) zum Steuern einer in den Partikelfilter eingegebenen Energiemenge auf der Grundlage der von dem Sensor detektierten Temperatur, derart, dass eine Temperatur des Partikelfilters nach einem Zeitpunkt, zu dem eine Regenerationsstartbedingung erfüllt ist, mit einer vorgegebenen Anweisungstemperatur übereinstimmt, wobei

das Abgassteuersystem den Partikelfilter durch Erhöhen der Temperatur des Partikelfilters, um die in dem Partikelfilter eingefangenen Partikel zu verbrennen, regeneriert, wobei das Regenerationssteuermittel Folgendes enthält:

Vorsteuermittel (B2) zum Zuführen von Energie eines vorgegebenen Vorsteuerbetrags zu dem Partikelfilter, derart, dass die Temperatur des Partikelfilters mit der Anweisungstemperatur nach dem Zeitpunkt, zu dem die Regenerationsstartbedingung erfüllt ist, übereinstimmt; und

Rückkopplungsmittel (B1, B3, B5, B6, B8 und B9) zum Ausführen einer Rückkopplungssteuerung einer Energiemenge, derart, dass die von dem Sensor detektierte Temperatur mit einer endgültigen Solltemperatur übereinstimmt, die eine Solltemperatur ist, die schließlich auf der Grundlage der Anweisungstemperatur nach dem Zeitpunkt, zu dem die Regenerationsstartbedingung erfüllt ist, bestimmt wird, und

das Rückkopplungsmittel Folgendes enthält:

ein Berechnungsmittel (B3, B6) für die detektierte Solltemperatur zum Berechnen einer von dem Sensor detektierten Solltemperatur entsprechend einem Zeitraum, der seit dem Zeitpunkt, zu dem die Regenerationsstartbedingung erfüllt ist, verstrichen ist, durch (i) Schätzen der von dem Sensor detektierten Temperatur für einen Zeitraum, der seit dem Zeitpunkt, zu dem die Regenerationsstartbedingung erfüllt ist, verstrichen ist, falls Energie des Vorsteuerbetrags dem Partikelfilter ab dem Zeitpunkt, zu dem die Regenerationsstartbedingung erfüllt ist, auf der Grundlage der endgültigen Solltemperatur zugeführt wird, und (ii) Verwenden eines Temperatursensormodells zum Erzeugen der geschätzten, von dem Sensor detektierten Temperatur als die von dem Sensor detektierte Solltemperatur, die ein Sollwert in der Rückkopplungssteuerung ist;

Rückkopplungssteuermittel (B5, B6, B9) zum Ausführen der Rückkopplungssteuerung durch Steuern der Energiemenge, die in den Partikelfilter eingegeben wird, derart, dass die von dem Sensor detektierte Solltemperatur mit der von dem Sensor detektierten Temperatur übereinstimmt; und

Rückkopplungssteuerverbot-Genehmigungsmittel (B10) zum Verbieten der Ausführung der Rückkopplungssteuerung, das die von dem Sensor detektierte Solltemperatur bis zu einem bestimmten Zeitpunkt verwendet, zu dem ein vorgegebener Zeitraum seit dem Zeitpunkt, zu dem die Regenerationsstartbedingung erfüllt ist, verstreicht, und zum Erlauben der Ausführung der Rückkopplungssteuerung nach dem bestimmten Zeitpunkt,

wobei das Temperatursensormodell durch eine Pade-Näherung konstruiert ist und

der bestimmte Zeitpunkt als der Zeitpunkt nach dem Zeitpunkt, zu dem die Regenerationsstartbedingung erfüllt ist, bestimmt ist, zu dem sich eine Differenz zwischen der endgültigen Solltemperatur und der von dem Sensor detektierten Solltemperatur von einem Zustand, in dem die Differenz größer als ein vorgegebener Temperaturdifferenz-Schwellenwert ist, zu einem Zustand, in dem die Differenz kleiner oder gleich dem Temperaturdifferenz-Schwellenwert ist, ändert.

2. Abgassteuersystem nach Anspruch 1, wobei

der Temperaturdifferenz-Schwellenwert auf einen Wert gesetzt wird, der kleiner oder gleich einer Differenz zwischen der endgültigen Solltemperatur und einem lokalen Maximalwert der von dem Sensor detektierten Solltemperatur ist, die zum ersten Mal nach dem Zeitpunkt, zu dem die Regenerationsstartbedingung erfüllt ist, erscheint.

**Revendications**

1. Système de contrôle de gaz d'échappement (10) pour un moteur à combustion interne, **caractérisé en ce qu'**il comprend :

un filtre à particules (53) qui est disposé dans un passage d'échappement (50) du moteur à combustion interne et qui piège des particules contenues dans du gaz d'échappement provenant du moteur ;

un capteur de température (65, 66) qui est disposé dans le passage d'échappement et qui délivre une valeur de sortie qui varie avec une température d'une partie au niveau de laquelle est disposé le capteur de température dans le passage d'échappement ;

une unité de conversion de température (B4, B7) qui convertit la valeur de sortie du capteur de température en une température détectée par capteur ; et

un moyen de contrôle de régénération (60) destiné à contrôler une quantité d'énergie appliquée au filtre à particules sur la base de la température détectée par capteur de telle sorte qu'une température du filtre à particules coïncide avec une température de consigne prédéterminée après un point temporel auquel une condition de démarrage de régénération est satisfaite, dans lequel

le système de contrôle de gaz d'échappement régénère le filtre à particules en augmentant la température du filtre à particules pour brûler les particules piégées dans le filtre à particules,

le moyen de contrôle de régénération comporte

un moyen prédictif (B2) destiné à fournir de l'énergie dans une quantité prédictive prédéterminée au filtre à particules de telle sorte que la température du filtre à particules coïncide avec la température de consigne après le point temporel auquel la condition de démarrage de régénération est satisfaite ; et

un moyen de rétroaction (B1, B3, B5, B6, B8 et B9) destiné à exécuter une commande à rétroaction sur une quantité de l'énergie de telle sorte que la température détectée par capteur coïncide avec une température cible finale qui est une température cible qui est déterminée pour finir sur la base de la température de consigne après le point temporel auquel la condition de démarrage de régénération est satisfaite, et

le moyen de rétroaction comporte

un moyen de calcul de température cible détectée (B3, B6) destiné à calculer une température cible détectée par capteur en fonction d'un laps de temps écoulé depuis le point temporel auquel la condition de démarrage de régénération est satisfaite (i) en estimant la température détectée par capteur pendant un laps de temps écoulé depuis le point temporel auquel la condition de démarrage de régénération est satisfaite dans le cas où l'énergie dans la quantité prédictive est fournie au filtre à particules depuis le point temporel auquel la condition de démarrage de régénération est satisfaite, sur la base de la température cible finale et (ii) en utilisant un modèle de capteur de température pour générer la température détectée par capteur estimée en tant que température cible détectée par capteur qui est une valeur cible dans la commande à rétroaction ;

un moyen de commande à rétroaction (B5, B6, B9) destiné à exécuter la commande à rétroaction en contrôlant la quantité d'énergie appliquée au filtre à particules de telle sorte que la température cible détectée par capteur coïncide avec la température détectée par capteur ; et

un moyen permettant d'empêcher la commande à rétroaction (B10) destiné à empêcher l'exécution de la commande à rétroaction qui utilise la température cible détectée par capteur jusqu'à un point temporel spécifique auquel une période prédéterminée s'est écoulée depuis le point temporel auquel la condition de démarrage de régénération est satisfaite, et permettre l'exécution de la commande à rétroaction après le point temporel spécifique,

dans lequel le modèle de capteur de température est construit par approximation de Padé, et

le point temporel spécifique est déterminé comme un point temporel auquel une différence entre la température cible finale et la température cible détectée par capteur passe d'un état où la différence est supérieure à une différence de température seuil prédéterminée à un état où la différence est inférieure ou égale à la différence de température seuil après le point temporel auquel la condition de démarrage de régénération est satisfaite.

2. Système de contrôle de gaz d'échappement selon la revendication 1, dans lequel

la différence de température seuil est réglée à une valeur inférieure ou égale à une différence entre la température cible finale et une valeur de maximum local de la température cible détectée par capteur, qui apparaît pour la première fois après le point temporel auquel la condition de démarrage de régénération est satisfaite.

F I G . 1

FIG.2

# FIG.3

COMPRESSION TOP
DEAD CENTER

MAIN
INJECTION

POST
INJECTION

EXPANSION BOTTOM
DEAD CENTER

# FIG.4

TEMPER-
ATURE

Tshirei

Tact

T1act

T2act

Offset2

Offset1

T0

L1

t1

L2

t0        t2

TIME

L1: FIRST TEMPERATURE
    SENSOR DEAD TIME
L2: SECOND TEMPERATURE
    SENSOR DEAD TIME

# FIG.5

# FIG.6A

# FIG.6B

# FIG.7A

FIRST TEMPERATURE SENSOR

C1

Map ωn1(GA)

NATURAL FREQUENCY ωn1

AIR AMOUNT GA

# FIG.7B

SECOND TEMPERATURE SENSOR

Map ωn2(SASH, GA)

C2

C3

ASH AMOUNT INCREASES

NATURAL FREQUENCY ωn2

AIR AMOUNT GA

# FIG.8A

FIRST TEMPERATURE SENSOR

MapTd1(GA)

C1

TIME CONSTANT Td1

AIR AMOUNT GA

# FIG.8B

SECOND TEMPERATURE SENSOR

ASH AMOUNT INCREASES

C3

C2

MapTd2(SASH, GA)

TIME CONSTANT Td2

AIR AMOUNT GA

# FIG.9A

FIRST TEMPERATURE SENSOR

Ki1 INTEGRAL GAIN

MapKi1(GA)

AIR AMOUNT GA

# FIG.9B

SECOND TEMPERATURE SENSOR

MapKi2(SASH, GA)

Ki2 INTEGRAL GAIN

ASH AMOUNT INCREASES

AIR AMOUNT GA

# FIG.10A

FIRST TEMPERATURE SENSOR

Kp1 PROPORTIONAL GAIN

MapKp1(GA)

AIR AMOUNT GA

# FIG.10B

SECOND TEMPERATURE SENSOR

MapKp2(SASH, GA)

Kp2 PROPORTIONAL GAIN

ASH AMOUNT INCREASES

AIR AMOUNT GA

# F I G . 11

ASH
AMOUNT
SASH

AIR
AMOUNT
GA

B4(M2)

T2in = Tshirei − Offset2 → COMPUTE SECOND
TEMPERATURE SENSOR
MODEL EXPRESSION
(TRANSFER FUNCTION) → T2tgt

COMPUTE SECOND TEMPERATURE
SENSOR TARGET VALUE T2tgt FOR FEEDBACK

# F I G . 12

FIRST
TEMPERATURE SENSOR

TEMPERATURE
DIFFERENCE
(DEVIATION
TEMPERATURE)

C2

C1

C3

THRESHOLD
GAth

AIR
AMOUNT GA

# F I G . 13

# FIG. 14A

DPF REGENERATION CONTROL — 1400

1402
XDPF=1 ? —— NO
YES

1404
IS REGENERATION CONTROL START CONDITION SATISFIED ? —— NO
YES

1438
IS REGENERATION CONTROL END CONDITION SATISFIED ?
YES

1406
XDPF ← 1

1440
XDPF ← 0

1408
IS IT IMMEDIATELY AFTER REGENERATION CONTROL START CONDITION IS SATISFIED ? —— NO
YES

1442
QP ← 0

1410
DETERMINE DPF COMMAND TEMPERATURE Tshirei

1412
KFB1 ← KFB1G,
KFB2 ← KFB2G,

1414
QPbase ← MapQPbase (Tshiri, NE, Qfin)

1416
ACQUIRE ASH AMOUNT SASH

( 1 )          ( 2 )          ( 3 )

# FIG.14B

①　　　　　　　　　②　　　　　　　　　③

COMPUTE FIRST
TEMPERATURE SENSOR
TARGET DETECTED
TEMPERATURE T1tgt — 1418

COMPUTE SECOND
TEMPERATURE SENSOR
TARGET DETECTED
TEMPERATURE T2tgt — 1420

1422

NO　　XFB = 1 ?

YES

COMPUTE FIRST FEEDBACK
AMOUNT KFB1 — 1424

COMPUTE FIRST FEEDBACK
AMOUNT KFB2 — 1426

1428

GA ≤ GAth ?　　NO

1436　　　　　YES　1430　　　　　　1432

KFB ← KFB1　　KFB ← KFB1　　KFB ← KFB2

QP ← QPbase・KFB — 1434

RETURN — 1495

# F I G . 15

COMPUTE F/B FIRST TARGET
TEMPERATURE T1tgt  —— 1500

DEAD TIME L1 ← MapL1(GA)  —— 1510

NATURAL FREQUENCY
$\omega$n1 ← Map$\omega$n1(GA)  —— 1520

CALCULATE CALCULATION
INTERMEDIATE VALUE w(n) BY
SUBSTITUTING $\omega$n1 INTO $\omega$n  —— 1530
WHERE z(n) = Tshirei − Offset1

CALCULATE OUTPUT y(n), OBTAINED BY
SUBSTITUTING L1 INTO L, AS FIRST
TEMPERATURE SENSOR TARGET  —— 1540
DETECTED TEMPERATURE T1tgt

RETURN  —— 1595

# FIG. 16

COMPUTE F/B SECOND TARGET
TEMPERATURE T2tgt —— 1600

DEAD TIME L2 ← MapL2(SASH, GA) —— 1610

NATURAL FREQUENCY
ωn2 ← Mapωn2(SASH, GA) —— 1620

CALCULATE CALCULATION
INTERMEDIATE VALUE w(n) BY
SUBSTITUTING ωn2 INTO ωn —— 1630
WHERE z(n) = Tshirei − Offset2

CALCULATE OUTPUT y(n), OBTAINED BY
SUBSTITUTING L2 INTO L, AS SECOND
TEMPERATURE SENSOR TARGET —— 1640
DETECTED TEMPERATURE T2tgt

RETURN —— 1695

# F I G . 17

COMPUTE FIRST FEEDBACK
AMOUNT K1FB — 1700

FIRST TEMPERATURE SENSOR
DETECTED TEMPERATURE
$T1act \leftarrow f(VT1)$ — 1710

DEVIATION $\Delta T1 \leftarrow T1tgt - T1act$ — 1720

INTEGRAL VALUE
$ST1(n) \leftarrow ST1(n-1) + \Delta T1$ — 1730

INTEGRAL GAIN $Ki1 \leftarrow MapKi1(\Delta T1)$ — 1740

PROPORTIONAL GAIN
$Kp1 \leftarrow MapKp1(\Delta T1)$ — 1750

$KFB1 \leftarrow Kp1 \cdot \Delta T1 + Ki1 \cdot ST1(n)$ — 1760

RETURN — 1795

35

# F I G . 18

COMPUTE SECOND FEEDBACK
AMOUNT K2FB — 1800

SECOND TEMPERATURE SENSOR
DETECTED TEMPERATURE
T2act ← f(VT2) — 1810

DEVIATION $\Delta T2$ ← T2tgt – T2act — 1820

INTEGRAL VALUE
ST2(n) ← ST2(n–1) + $\Delta T2$ — 1830

INTEGRAL GAIN
Ki2 ← MapKi2(SASH, $\Delta T2$) — 1840

PROPORTIONAL GAIN
Kp2 ← MapKp2(SASH, $\Delta T2$) — 1850

KFB2 ← Kp2 · $\Delta T2$ + Ki2 · ST2(n) — 1860

RETURN — 1895

# F I G . 19

FEEDBACK CONDITION DETERMINATION ———1900

———1905

XDPF = 1 ? (IS REGENERATION CONTROL BEING EXECUTED ?) —NO

YES ———1920

CAN TEMPERATURE OF DOP AND/OR TEMPERATURE OF DPF EXCEED CORRESPONDING TEMPERATURE PERMISSIBLE VALUES ? —YES

NO ———1935

IS IT IN CATALYST DEACTIVATION STATE ? —YES

NO ———1940

IS POST FUEL INJECTION AMOUNT LIMIT CONDITION NOT SATISFIED ?(GA ≥ GAHith ?) —YES

NO ———1945

GA ≥ GALoth ? —NO

YES ———1950

HAS PREDETERMINED PERIOD OF TIME ELAPSED AFTER ENGINE START ? —NO

YES ———1955

T0act ≥ T0Loth ? —NO

YES ———1960

T1act ≥ T1Hith ? —NO

YES ———1965

$\Delta T1(= T1tgt - T1act) < \Delta T1th$ AND $\Delta T2(= T2tgt - T2act) < \Delta T2th$ ? —NO

1925 | YES | 1970 | 1910

F/B CONTROL PROHIBITED XFB ← 0

F/B CONTROL ALLOWED XFB ← 1

F/B CONTROL PROHIBITED XFB ← 0

1930 | | | 1915

KFB1G ← 1
KFB2G ← 1

KFB1G ← KFB1
KFB2G ← KFB2

RETURN ———1995

37

# FIG.20

**EP 2 610 449 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005315198 A
- JP 2010196498 A